# EUROPEAN PATENT SPECIFICATION

(11) **EP 1 773 136 B1**
(45) Date of publication and mention of the grant of the patent: **03.07.2013**
(21) Application number: 05705557.6
(22) Date of filing: 12.01.2005
(51) Int. Cl.: A23L 1/31, A23L 1/314, A23L 1/226

(54) **LOW FLAVOR ANTI-MICROBIALS DRIVED FROM SMOKE FLAVORS**
GESCHMACKSARME, VON RAUCHAROMEN ABSTAMMENDE ANTIMIKROBIELLE MITTEL
ANTIMICROBIENS A FAIBLE AROME DERIVES D'AROMES DE FUME

(30) Priority: 13.01.2004 US 536160 P
(43) Date of publication of application: 18.04.2007
(73) Proprietor: Mastertaste, Monterey TN 38574 (US)
(72) Inventor: MOELLER, Patrick, W., Brentwood, TN 37027 (US); RAMAKRISHNAN, Sreekumar, Franklin, TN 37067 (US)
(74) Representative: Isarpatent
(86) International application number: PCT/US2005/000956
(87) International publication number: WO 2005/070181

(56) References cited:
- WO-A1-01/05255
- WO-A1-90/12514
- WO-A1-98/05216
- WO-A1-2004/077965
- US-A- 3 806 609
- US-A- 4 112 133
- US-A- 4 431 032
- US-A- 4 657 765
- US-A- 5 043 174
- US-A- 5 637 339
- US-B1- 6 214 395
- US-B2- 6 541 053
- VITT ET AL: "Inhibition of Listeria Innocua and L. Monocytogenes in a laboratory medium and cold-smoked salmon containing liquid smoke", JOURNAL OF FOOD SAFETY, XX, XX, vol. 21, 1 January 2001 (2001-01-01), pages 111-125, XP002477640, ISSN: 0149-6085
- ESTRADA-MUNOZ R ET AL: "Liquid smoke effects on Escherichia coli O157:H7, and its antioxidant properties in beef products", JOURNAL OF FOOD SCIENCE, WILEY-BLACKWELL PUBLISHING, INC, US, vol. 63, no. 1, 1 January 1998 (1998-01-01), pages 150-153, XP008133043, ISSN: 0022-1147
- STANKIEWICZ-BERGER H ET AL: "Bacteriostatic activity of 'Refined Liquid Smoke'. (translated)", ACTA ALIMENTARIA POLONICA 1979 INST. OF MEAT & FAT IND., WARSAW, POLAND, vol. 5, no. 4, 1979, pages 391-398, XP08133055,
- BRANDT L A: "Liquid smokes solve formulation problems.", PREPARED FOODS 2001, vol. 170, no. 2, February 2001 (2001-02), pages 59-59, XP08133056,
- SOFOS J N ET AL: "Effect of ether extracts from condensed wood smokes on the growth of Aeromonas hydrophila and Staphylococcus aureus", JOURNAL OF FOOD SCIENCE, WILEY-BLACKWELL PUBLISHING, INC, US, vol. 53, no. 6, 1 January 1988 (1988-01-01), pages 1840-1843, XP008133040, ISSN: 0022-1147, DOI: DOI:DOI:10.1111/J.1365-2621.1988.TB07856.X

## Description

### RELATED APPLICATIONS

This application claims the benefit of U.S. Provisional Patent Application Serial No. 60/536,160, filed January 13, 2004, the disclosure of which is incorporated herein by reference in its entirety.

### TECHNICAL FIELD

The presently disclosed subject matter relates to methods and compositions for anti-microbial treatment of food products. More particularly, the presently disclosed subject matter relates to derivatives of liquid smoke and methods of treating food products with the derivatives to inhibit the growth of microorganisms without imparting smoky flavors to the food product.

### Table of Abbreviations

| | | |
|---|---|---|
| CFU | - | colony-forming unit |
| DLS | - | derivative of liquid smoke |
| KSU | - | Kansas State University |
| LS | - | liquid smoke |
| MEB | - | malt extract broth |
| MIC | - | minimum inhibitory concentration |
| MOX | - | Modified Oxford Agar |
| PDA | - | potato dextrose agar |
| PW | - | peptone water |
| RTE | - | ready-to-eat |
| RTC | - | ready-to-cook |
| TSA | - | Tryptic Soy agar |
| TSB | - | Tryptic Soy broth |

### BACKGROUND

The presence of microorganisms on food products is a considerable public health concern. For example, outbreaks of food-borne illness and death associated with various strains of *Escherichia coli* are frequently reported. In fact, *E. coli* O157:H7 is a recognized food-borne pathogen that has been found to contaminate undercooked beef products, especially ground beef.

Another such food-borne pathogen is *Listeria monocytogenes,* which can cause pneumonia, meningitis, and sepsis. The incidence of *Listeria monocytogenes* in the meat processing industry has caused great concern to packers, and it is believed to be a major current health threat. The presence of *Listeria monocytogenes* bacteria on processed meat products represents a danger to the public in that the bacteria can grow on food and increase to an infectious dose under refrigerated conditions.

Given the importance of maintaining a safe food supply, various approaches have been taken in attempts to kill pathogens that might be present in or on food. One traditional approach is to smoke the food product in a smokehouse. This is, however, a time consuming process requiring large amounts of space, and thus more efficient approaches are desirable.

Currently, the treatment of foods with wood smoke has been substantially replaced by the use of "liquid smoke", which is a solution comprising liquid condensates capable of imparting smoky hue or coloration and smoky flavor to a meat exposed to a liquid or vapor phase of the solution. In addition to these attributes of liquid smoke, it is also now known that liquid smoke preparations that are applied in the manufacturing of meat products have antimicrobial activity against bacteria such as *Listeria monocytogenes.*

Unfortunately, although liquid smoke application is probably quite effective during meat processing to kill *Listeria monocytogenes* bacteria, it has recently become apparent that there is a danger that re-inoculation or recontamination by *Listeria monocytogenes* bacteria can occur at some point between cooking and final packaging during the meat processing sequence. Unfortunately, even very low levels of bacterial contamination due to re-inoculation can result in dangerously high levels of bacteria by the time the meat product has been on the store shelf for a period of time.

In an effort to address this problem, research has been conducted by the meat processing industry into the use of an application of liquid smoke directly to the meat product prior to packaging in order to prevent re-inoculation and subsequent growth of *Listeria monocytogenes* bacteria on the packaged meat product. *See* U.S. Patent No. 5.043,174 to Lindner. Thus, the bacteria is initially killed or minimized by the liquid smoke and heat treatment that takes place during the meat processing cycle, and prior to packaging, another treatment of liquid smoke is applied directly to the surface of the processed food product to control the re-inoculation of the meat product with bacteria or other microorganisms.

While simple and efficient, this approach is not always acceptable, however, since meat products having an application of liquid smoke applied thereto subsequent to the conventional meat packaging process are adversely affected with respect to taste. The additional liquid smoke results in an undesirable over-enhancement of the smoky flavor of the meat product and a generally commercially unsatisfactory product. More importantly, treatment of a food product with liquid smoke would be particularly undesirable with foods that are not intended to have a smoky flavor at all. Thus, the search has continued for a solution to the problem of growth on food products of dangerous pathogens that does not render the meat product substantially inedible and consequently unmarketable.

WO 98/05216 A1 discloses a meat processing method for reducing and inhibiting host organism infestation of meat and providing protection to the meat against oxidation by application of a liquid smoke derivative to the meat.

WO 2004/077965 A1 describes a preparation smoked products such as fish, meat, charcuterie and similar, wherein the method comprises at least one flavoring step consisting in providing the food product with a smoky flavor.

The article of S. M. Vitt et al.: "Inhibition of Listeria innocua and L. monocytogenes in a laboratory medium and cold-smoked salmon containing liquid smoke", in Journal of Food Safety 21, 2001, pages 111 -125 relates to the testing of five commercial liquid smokes in treating chum salmon samples for reducing the growth of microorganisms.

Furthermore, R. Estrada-Munoz et al. performed experiments to evaluate the antibacterial properties of liquid smoke in meat systems, which are presented in "Liquid smoke effects on Escherichia coli O157:H7, and its antioxidant properties in beef products", Journal of Food Science 63(1), 1998, pages 150 -153.

US 4,657,765 A discloses a tar-depleted, concentrated liquid smoke that has superior flavoring and coloring abilities, low phenolic content and a low acid content.

In addition, US 6,214,395 B1 describes a liquid smoke browning agent solution having good browning but minimal or no flavor.

US 3,806,609 A relates to a method of producing liquid smoke comprising a distillation step of preneutralized aqueous smoke condensate with total acidity of 4.0-4.5% as calculated for acetic acid into two fractions and a treatment step of the first obtained fraction for recovery of curing components adsorbed and mixing them with the second fraction.

H. Stankiewicz-Berger and P. Kitzman investigated the bacteriostatic activity of smoke flavoring in "Investigation of bacteriostatic activity of rafined liquid smoke", Acta Alimentaria Polonica Vol. V No. 4,1979, pages 391 - 398.

L. A. Brandt describes in "Liquid smokes solve formulation problems", Prepared Foods 170 (2), 2001, page 59 that liquid smoke imparts smoke flavor to meat, fish, and poultry or wherever a touch of smoke flavor is needed, and that liquid smokes function as antimicrobials, impart color, reduce warmed-over flavor and add texture.

US 4,431,032 A discloses that a tar-containing aqueous liquid wood smoke is at least partially neutralized under controlled temperature to form a tar-enriched fraction and a tar-depleted liquid smoke fraction, and that the latter is used for food casing treatment to facilitate smoke coloring and flavoring of encased foodstuff during processing.

According to WO 01/05255 A1 food products, such as precooked meats, raw meats, and poultry are treated with a decontaminant solution to remove surface microorganism contamination.

US 5,637,339 A discloses a tar-depleted liquid smoke having total water miscibility.

WO 90/12514 A1 further describes high browning, reduced phenol and basic constituent liquid smoke compositions that are useful for coloring and flavoring edible foodstuffs.

J. N. Sofos et al. screened liquid smokes from 20 different woods for microbial activity, results of which they presented in "Effect of ether extracts from condensed wood smokes on the growth of Aeromonas hydrophila and Staphylococcus aureus", Journal of Food Science 53 (6), 1988, pages 1840 - 1843.

US 4,112,133 A describes improved liquid smoke compositions which do not form undesirable solids during use or storage.

Furthermore, US 6,541,053 B2 discloses a collagen processing method for thickening or hardening the collagen sufficiently by application of a liquid smoke fraction obtained from a liquid smoke derivative.

Finally, US 5,043,174 relates to a liquid smoke derivative product containing a minimum of carbonyl and phenol and having no staining index and high acidity.

What is needed, then, is a derivative of liquid smoke that retains anti-microbial activity but does not impart smoky flavors to the food product. To meet this need, the presently disclosed subject matter provides derivatives of liquid smoke and methods of treating food products with derivatives of liquid smoke to inhibit the growth of microorganisms without altering the flavor of the food product.

### SUMMARY

The presently disclosed subject matter provides methods for inhibiting growth of a microorganism in a food product. In some embodiments, the method comprises treating the food product with a derivative of liquid smoke that imparts no smoke flavoring to the food product according to claim 1, whereby growth of a microorganism is inhibited. In some embodiments, the microorganism is selected from the group consisting of a bacterium, a yeast, and a fungus. In some embodiments, the bacterium is selected from the group consisting of a strain of *Streptococcus*, *Shigella*, *Hafnia*, *Enterobacter*, *Serratia*, *Staphylococcus*, *Pseudomonas*, *Citrobacter*, *Klebsiella*, *Escherichia coli*, *Listeria*, and *Salmonella*. In some embodiments, the yeast is a strain of *Saccharomyces*. In some embodiments, the fungus is a strain of *Aspergillus*.

In some embodiments of the presently disclosed subject matter, the food product is a ready-to-eat (RTE) food product. In some embodiments, the ready-to-eat food product comprises poultry, pork, or beef. In some embodiments, RTE foods include deli meats (*e.g.* turkey, roast beef, ham, chicken, salami, bologna, etc.), and hot dogs.

In some embodiments of the presently disclosed subject matter, the food product is a ready-to-cook (RTC) food product. In some embodiments, the ready-to-cook food product comprises poultry, pork, beef or a par-baked dough product. In some embodiments, the ready-to-cook food product comprises ground beef, or par-baked dough products such as bread and rolls.

The derivative of liquid smoke comprises: (a) titratable acidity in a concentration of 0 to about 6% weight per unit volume (w/v); (b) at least 10% weight per unit volume (w/v) carbonyl; (c) phenolics in a concentration of less than about 0.5% weight per unit volume (w/v); (d) water in a concentration of less than about 97% weight per unit volume (w/v); and has (e) a pH of at least 3.0. In some embodiments, the derivative of liquid smoke comprises carbonyl in a concentration to about 12.0% weight per unit volume (w/v), and a pH of about 5.0 to about 6.0. Also described is that the derivative of liquid smoke comprises carbonyl in a concentration of about 3.0 to about 8.0% weight per unit volume (w/v), phenol in a concentration of about 0.01 to 0.5% weight per unit volume (w/v), and a pH of about 5.0 to about 6.0. The derivative of liquid smoke has a pH of at least about 3.0. In some embodiments, the pH is between about 4.5 and 6.5. The derivative of liquid smoke comprises carbonyl of at least 10% weight per unit volume (w/v).

In some embodiments, one derivative of liquid smoke is produced by processing liquid smoke through an evaporator to separate and condense the low boiling elements thereof to produce the derivative of liquid smoke. In some embodiments, the sawdust is delignified prior to pyrolysis to produce low flavor products. Various of these products and derivatives can be blended together to produce a range of carbonyl levels. They can be carbon treated to substantially reduce phenols. They can also be treated with neutralizing agents to adjust pH/acidity. In some embodiments, the derivative of liquid smoke is sprayed onto the food product. In some embodiments, the food product is dipped into a bath of the derivative of liquid smoke. In some embodiments, the derivative of liquid smoke comprises an additional wetting agent. In some embodiments, the additional wetting agent comprises polysorbate.

In some embodiments, the presently disclosed subject matter further comprises heating the food product to at least 73.9°C (165°F) for at least about 1 minute. In some embodiments, the heating step is performed after the treating step.

The presently disclosed subject matter also provides antimicrobial derivatives of liquid smoke. The derivative of liquid smoke: (i) comprises (a) titratable acidity in a concentration of 0 to 6% weight per unit volume (w/v); (b) carbonyl of at least 10% weight per unit volume (w/v); (c) phenolics in a concentration of less than 0.5 % weight per unit volume (w/v); (d) water in a concentration of less than 97% weight per unit volume (w/v); and has (e) a pH of at least 3.0; (ii) imparts no liquid smoke flavor to a food product when the food product is treated with the derivative of liquid smoke; and (iii) inhibits growth on a food product of a microorganism selected from the group consisting of *Streptococcus*, *Shigella*, *Hafnia*, *Enterobacter*, *Serratia*, *Staphylococcus*, *Pseudomonas*, *Citrobacter*, *Klebsiella*, *Escherichia coli*, *Listeria*, *Salmonella*, *Saccharomyces*, and *Aspergillus* when the food product is treated with the derivative of liquid smoke. The derivative of liquid smoke has a pH of about 3.0 or more. In some embodiments, the pH is between about 4.5 and 6.5. The derivative of liquid smoke comprises carbonyl of at least 10% weight per unit volume (w/v).

In some embodiments, the derivative of liquid smoke comprises: (a) titratable acidity in a concentration of 0 to about 6% weight per unit volume (w/v); (b) at least about 10% weight per unit volume (w/v) carbonyl; (c) phenol in a concentration of less than about 0.5% weight per unit volume (w/v); and (d) water in a concentration of less than about 97% weight per unit volume (w/v). In some embodiments, the derivative of liquid smoke comprises carbonyl in a concentration to about 12.0% weight per unit volume (w/v) and a pH of about 5.0 to about 6.0. Also described is a derivative of liquid smoke comprising carbonyl in a concentration of about 5.0 to about 8.0% weight per unit volume (w/v), phenolics in a concentration of about 0.01 to 0.5% weight per unit volume (w/v), and a pH of about 5.0 to about 6.0.

In some embodiments of the presently disclosed subject matter, the food product is a ready-to-eat food product.

In some embodiments, the ready-to-eat food product comprises poultry, pork, beef, or a baked dough product. In some embodiments, RTE foods include deli meats (*e.g.* turkey, roast beef, ham, chicken, salami, bologna, etc.) or hot dogs.

In some embodiments, the food product is a ready-to-cook food product. In some embodiments, the ready-to-cook food product comprises poultry, pork, or beef. In some embodiments, the ready-to-cook food product comprises ground beef. In some embodiments, the RTC food comprises par-baked dough products such as bread and rolls.

In some embodiments, the derivative of liquid smoke comprises an additional wetting agent. In some embodiments, the additional wetting agent comprises polysorbate.

An object of the presently disclosed subject matter having been stated above, other objects and advantages of the presently disclosed subject matter will become apparent to those of ordinary skill in the art after a study of the following description and non-limiting Examples.

### BRIEF DESCRIPTION OF THE DRAWINGS

Figure 1 depicts growth curves of *Escherichia coli* 8677 in Tryptic Soy broth (TSB) supplemented with dilutions of Smokes 1 (0.75%), 2 (1.00%), 3 (1.00%), or 8 (2.00%). The dilutions were chosen to be below the Minimum Inhibitory Concentrations (MIC) for each individual derivative of liquid smoke (DLS).
Figure 2 depicts growth curves of *Escherichia coli* 8677 in Tryptic Soy broth (TSB) supplemented with concentrations of Smoke 1 between 0.00% and 0.75%.
Figure 3 depicts growth curves of *Salmonella seftenberg* in Tryptic Soy broth (TSB) supplemented with dilutions of Smokes 1 (0.50%), 2 (1.00%), 3 (1.00%), and 8 (2.00%).
Figure 4 depicts growth curves of *Salmonella seftenberg* in Tryptic Soy broth (TSB) supplemented with concentrations of Smoke 1 between 0.00% and 0.50%.
Figure 5 depicts growth curves of *Listeria innocua* M1 in Tryptic Soy broth (TSB) supplemented with dilutions of Smokes 1 (0.50%), 2 (0.40%), 3 (0.50%), and 8 (2.00%).
Figure 6 depicts growth curves of *Listeria innocua* M1 in Tryptic Soy broth (TSB) supplemented with concentrations of Smoke 1 between 0.00% and 0.75%.
Figure 7 depicts growth curves of *Saccharomyces cerevisiae* in malt extract broth (MEB) supplemented with 0.50 % dilutions of Smokes 1, 2, 3, and 8.
Figure 8 depicts growth curves of *Saccharomyces cerevisiae* in malt extract broth (MEB) supplemented with concentrations of Smoke 1 between 0.00% and 0.75%.
Figure 9 depicts the average circumference of *Aspergillus niger* spores grown on potato dextrose agar (PDA) in the presence of dilutions of Smokes 1 (0.75%), 2 (1.25%), 3 (1.25%), and 8 (5.00%) at days 1, 3, 4, and 7.
Figure 10 depicts the effects of combined treatment of the surface of restructured turkey breast with derivatives of liquid smoke (Smoke 2 or Smoke 3) and surface saturated steam-based pasteurization (0, 1, 2, and 3 minutes) on the growth of *Listeria monocytogenes* enumerated on Tryptic Soy agar. Numbers of colonies are presented as log₁₀ CFU/cm².
Figure 11 depicts the effects of combined treatment of the surface of restructured turkey breast with derivatives of liquid smoke (Smoke 2 or Smoke 3) and surface saturated steam-based pasteurization (0, 1, 2, and 3 minutes) on the growth of *Listeria monocytogenes* enumerated on Modified Oxford Agar (MOX). Numbers of colonies are presented as log₁₀ CFU/cm².
Figure 12 depicts the reductions in the numbers of colonies (presented as log₁₀ CFU/cm²) resulting from combined treatment of the surface of restructured turkey breast with derivatives of liquid smoke (Smoke 2 or Smoke 3) and surface saturated steam-based pasteurization (0, 1, 2, and 3 minutes) on the growth of *Listeria monocytogenes* enumerated on Tryptic Soy agar.
Figure 13 depicts the reductions in the numbers of colonies (presented as log₁₀ CFU/cm²) resulting from combined treatment of the surface of restructured turkey breast with derivatives of liquid smoke (Smoke 2 or Smoke 3) and surface saturated steam-based pasteurization (0, 1, 2, and 3 minutes) on the growth *of Listeria monocytogenes* enumerated on Modified Oxford Agar (MOX).
Figures 14A-14E depict the results of treating par-baked dinner rolls with Smoke 1. Commercial par baked dinner rolls were purchased 2 days before expiration date on the package. On the day before expiration, they were sprayed lightly with a 30% DLS solution, packaged, and held at room temperature. Pick-up level was 1.5 to 2.0% to insure coverage. Photos were taken beginning 24 hours later on the expiration date.

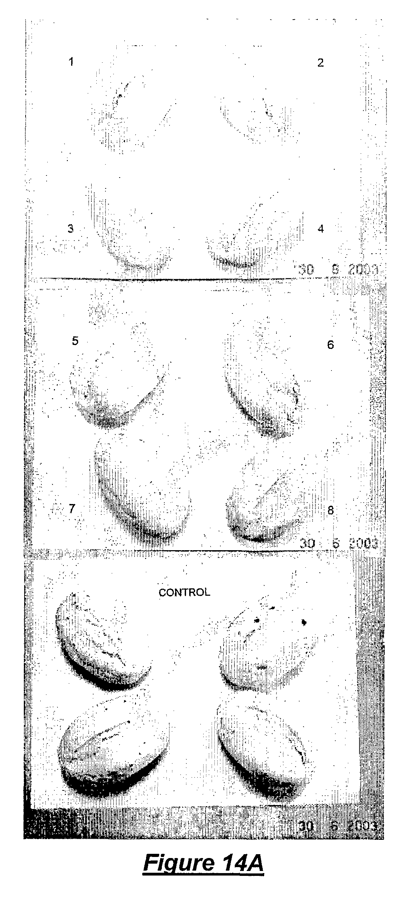

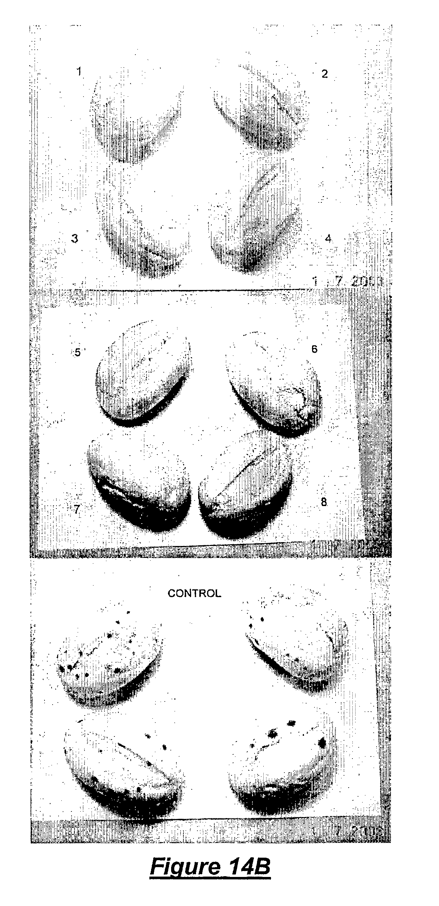

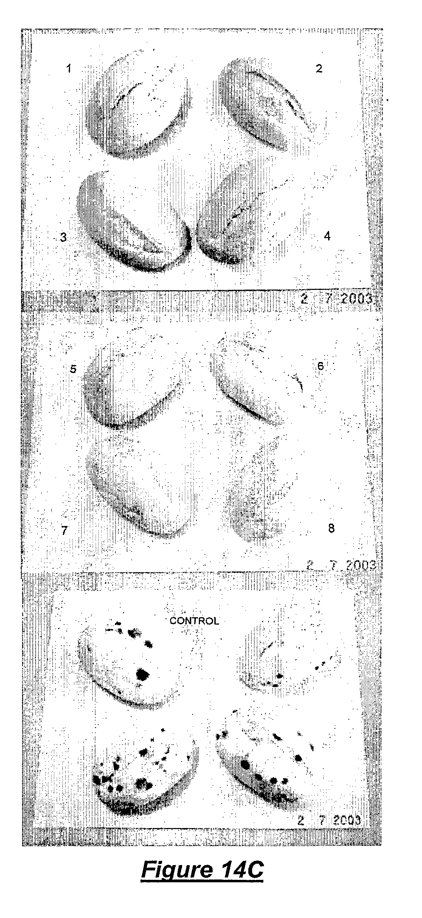

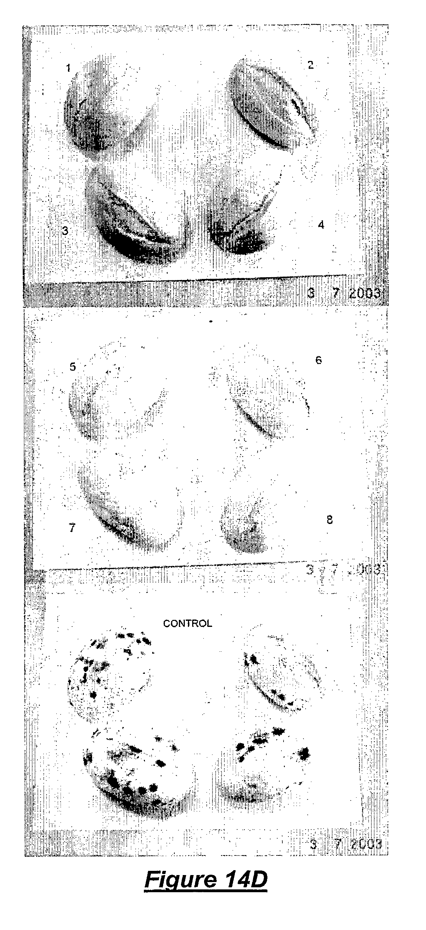

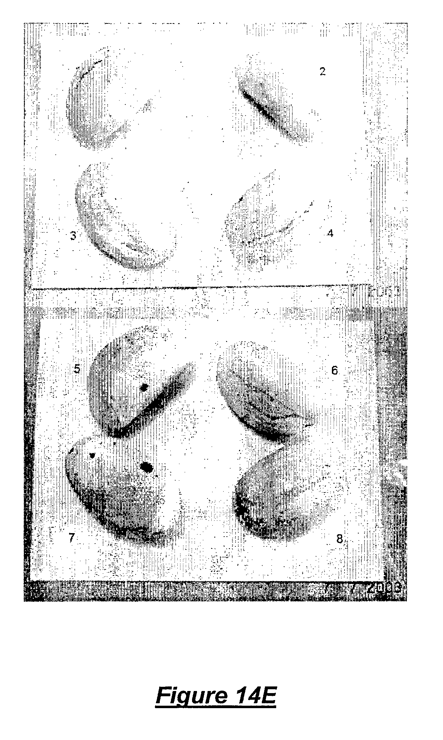

Figure 14A depicts photographs of the par-baked dinner rolls 1 day after treatment with a DLS (top two panels). The bottom panel depicts an untreated negative control. Figure 14B depicts photographs of the par-baked dinner rolls 2 days after treatment with a DLS (top two panels). The bottom panel depicts an untreated negative control. Figure 14C depicts photographs of the par-baked dinner rolls 3 days after treatment with a DLS (top two panels). The bottom panel depicts an untreated negative control. Figure 14D depicts photographs of the par-baked dinner rolls 4 days after treatment with a DLS (top two panels). The bottom panel depicts an untreated negative control. Figure 14E depicts photographs of the par-baked dinner rolls 1 week after treatment with a DLS. All 12 rolls were from the same package as purchased. The 8 treated rolls (top two panels in each Figure) were all treated equally with the same DLS and packaged separately. The 4 control rolls (bottom panel in Figures 14A-14D) were left untreated and placed in a closed plastic bag.

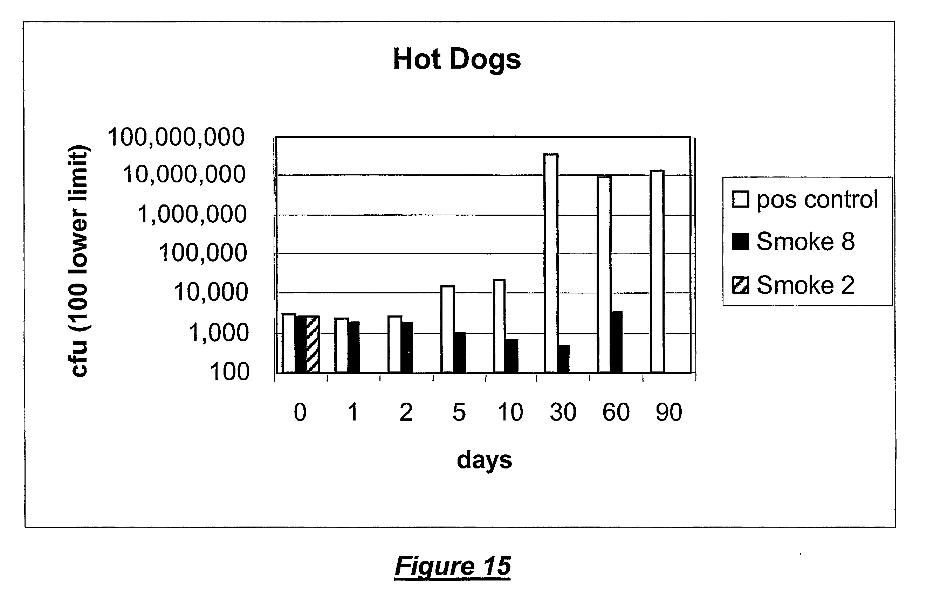

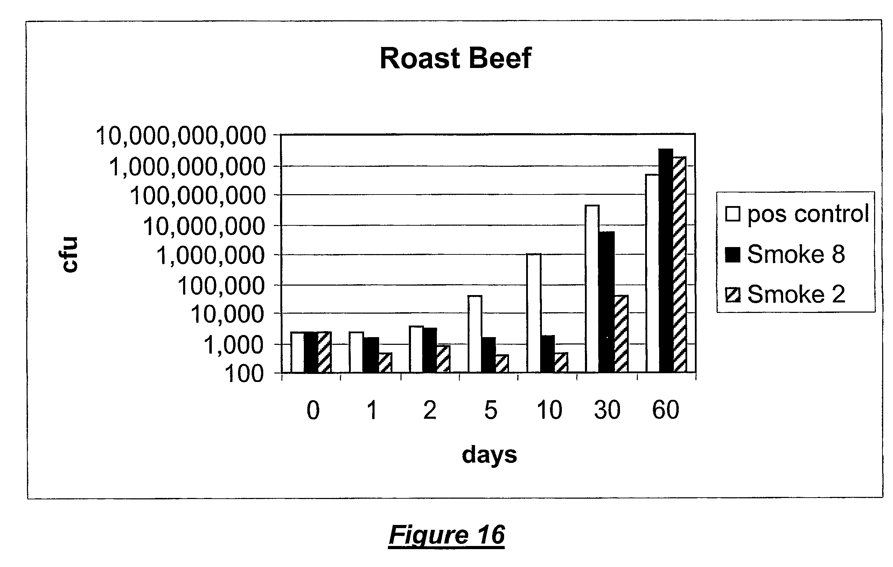

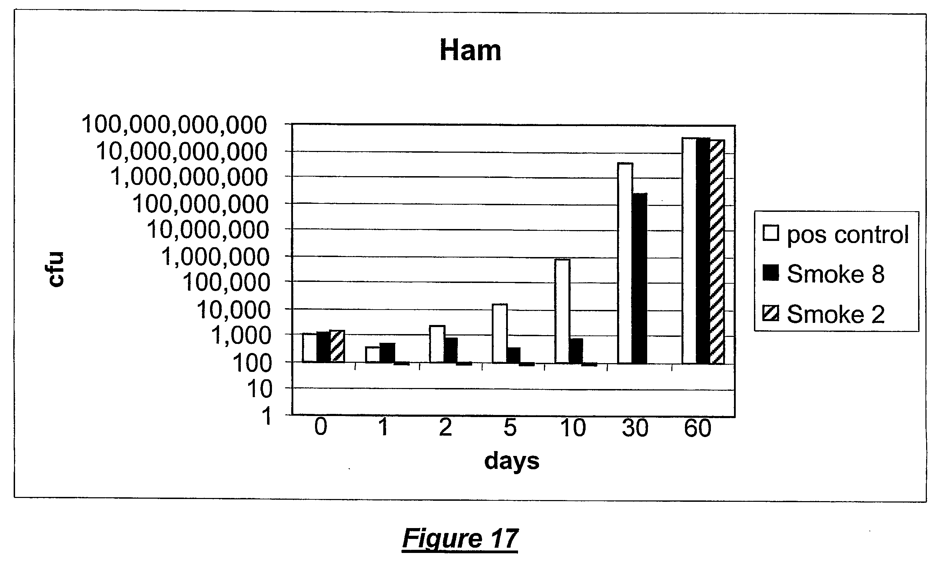

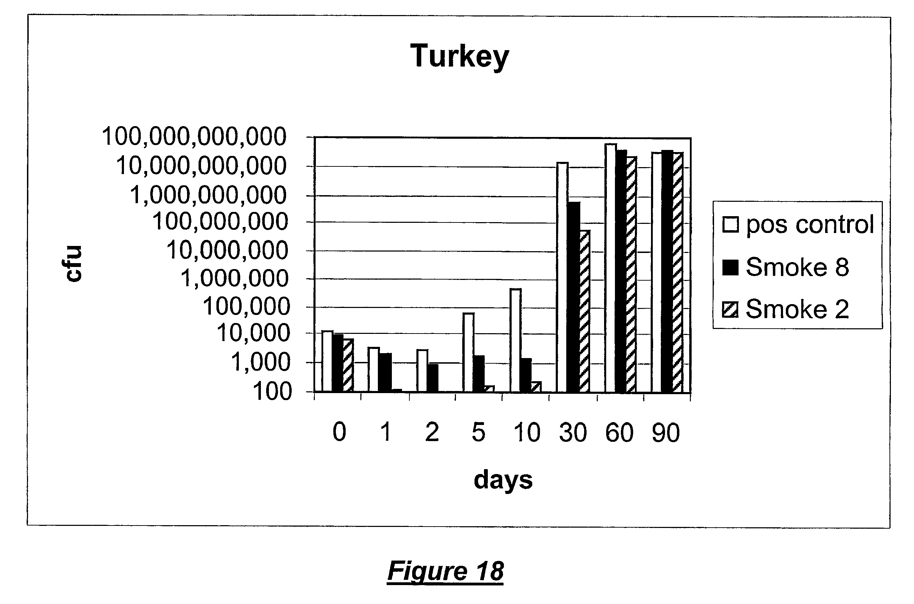

Figures 15-18 depict the results of low level (10³-10⁴ CFU) inoculation with *Listeria monocytogenes*. Figure 15 depicts the results of treating hot dogs that had been inoculated with about 3500 CFU of *Listeria monocytogenes* with Smoke 8 and Smoke 3. Figure 16 depicts the results of treating roast beef that had been inoculated with about 1700 CFU of *Listeria monocytogenes* with Smoke 8 and Smoke 3. Figure 17 depicts the results of treating ham that had been inoculated with about 1700 CFU of *Listeria monocytogenes* with Smoke 8 and Smoke 3. Figure 18 depicts the results of treating turkey that had been inoculated with about 7500 CFU of *Listeria monocytogenes* with Smoke 8 and Smoke 3.

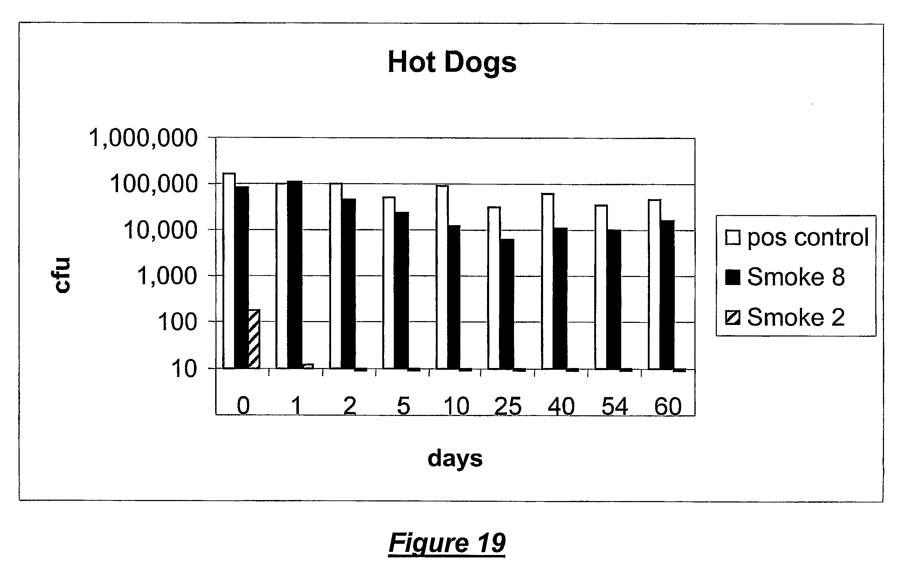

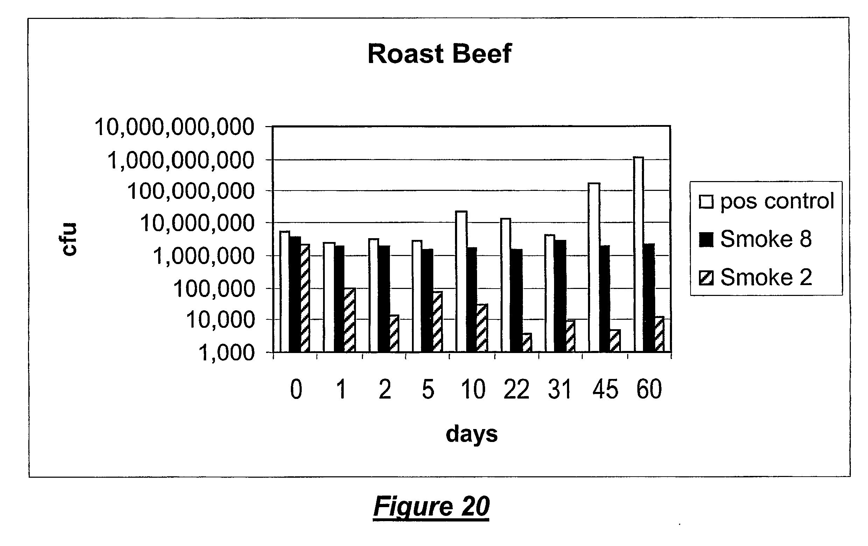

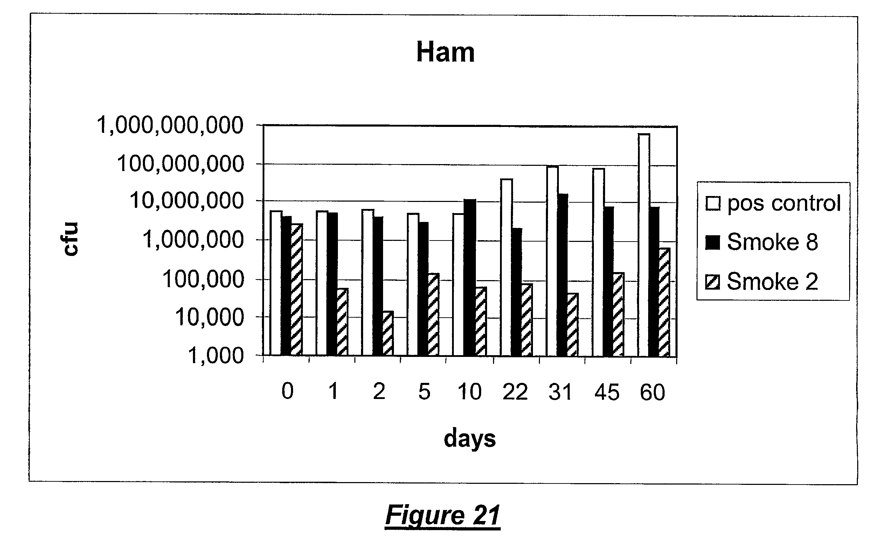

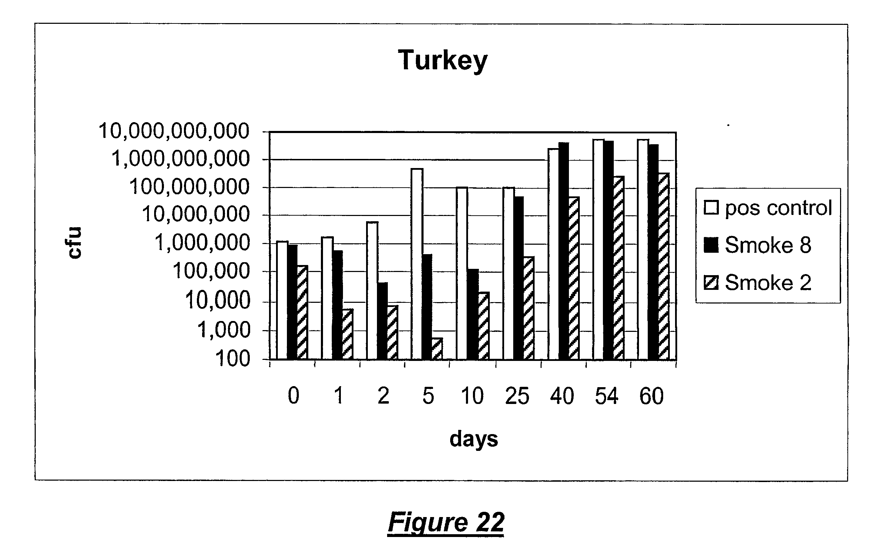

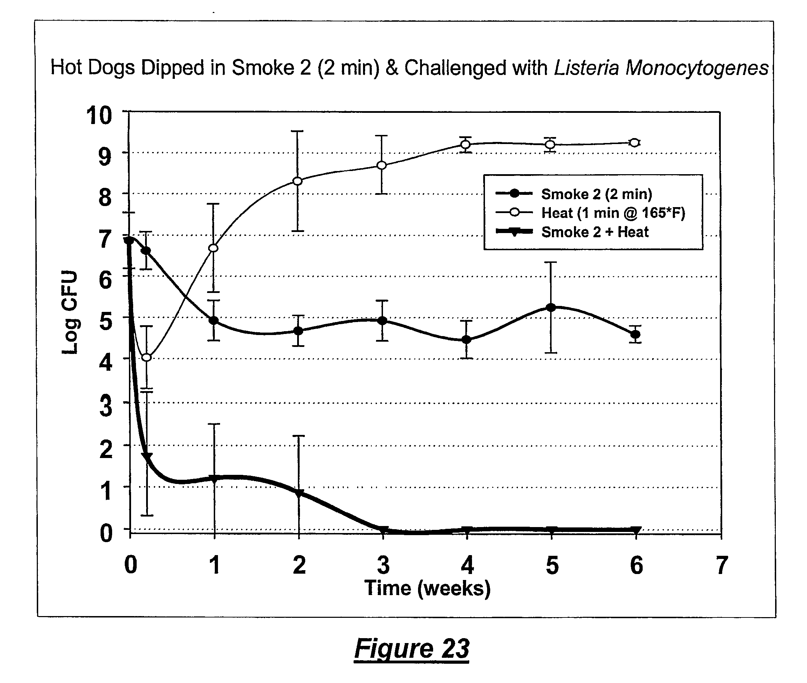

Figures 19-23 depict the results of high level (10⁵-10⁷ CFU) inoculation with *Listeria monocytogenes.* Figure 19 depicts the results of treating hot dogs that had been inoculated with about 1.6 x 10⁵ CFU of *Listeria monocytogenes* with Smoke 8 and Smoke 3. Figure 20 depicts the results of treating roast beef that had been inoculated with about 2.4 x 10⁶ CFU of *Listeria monocytogenes* with Smoke 8 and Smoke 3. Figure 21 depicts the results of treating ham that had been inoculated with about 3.8 x 10⁶ CFU of *Listeria monocytogenes* with Smoke 8 and Smoke 3. Figure 22 depicts the results of treating turkey that had been inoculated with about 1.2 x 10⁶ CFU of *Listeria monocytogenes* with Smoke 8 and Smoke 3. Figure 23 depicts the effect of Smoke 2 and/or heat treatment (1 minute at 165°F) on *Listeria monocytogenes* growth during shelf-life storage of inoculated hot dogs.

### DETAILED DESCRIPTION

All references cited in the specification, including patents, patent application publications, and non-patent literature, are incorporated herein by reference to the extent that they supplement, explain , provide a background for, or teach methodology, techniques, and/or compositions employed herein. Also included by reference are the following U.S. Patents to Moeller and/or Moeller et al.: 5,637,339; 6,214,395; 6,261,623; 6,541,053.

### I. Definitions

All technical and scientific terms used herein, unless otherwise defined below, are intended to have the same meaning as commonly understood by one of ordinary skill in the art. References to techniques employed herein are intended to refer to the techniques as commonly understood in the art, including variations on those techniques or substitutions of equivalent techniques that would be apparent to one of skill in the art. While the following terms are believed to be well understood by one of ordinary skill in the art, the following definitions are set forth to facilitate explanation of the presently disclosed subject matter.

Following long-standing patent law convention, the terms "a", "an", and "the" mean "one or more" when used in this application, including the claims.

As used herein, unless specifically indicated otherwise, the word "or" is used in the "inclusive" sense of "and/or" and not the "exclusive" sense of "either/or".

As used herein, the phrase "liquid smoke (LS)" refers to a solution comprising liquid reagents capable of imparting a smoky hue or coloration and smoky flavor to a food product exposed to a liquid or vapor phase of the solution. The use of liquid smoke provides many advantages in meat processing including the ability to use continuous processing when smoking meat as well as more uniform smoke taste and smoke coloration to the meat products treated therewith. The use of liquid smoke in lieu of wood smoke is now conventional in meat processing and can be more fully appreciated with reference to representative U.S. Patent Nos. 3,873,741; 4,250,199; 4,298,435; and 5,043,174.

LS has also been found to possess antimicrobial activity. For example, U.S. Patent No. 5,043,174 discloses that treatment of hot dogs with LS (ZESTI-SMOKE (Code 10), available from Mastertaste of Crossville, Tennessee, United States of America) can prevent post-processing re-inoculation with *Listeria monocytogenes.* However, the LS used imparts significant smoky flavor on the treated food, which can be undesirable under certain circumstances. Thus, it would be advantageous to generate derivatives of liquid smoke that retain antimicrobial activity yet impart no smoky flavor to food products during the treatment stage. That is the unexpected and surprising result of the methods and compositions discovered and described and claimed herein.

As used herein, the phrase "antimicrobial activity" refers generally to an activity of a liquid smoke or derivative of liquid smoke that results in either the killing of a microorganism (including, but not limited to microbicidal and microbiolytic activities) or the inhibition of the growth of a microorganism (including, but not limited to a microbiostatic activity). With respect to an inhibition of microbial growth, the term "antimicrobial activity" is intended to encompass both total inhibition (i.e. the microorganism does not grow at all or at an undetectable rate in the presence of the DLS) and partial inhibition, the latter being characterized by either a delay in the initiation of growth of the microorganism or a reduction in the rate at which the microorganism grows, or both.

As used herein, the phrase "derivative of liquid smoke (DLS)" refers to a derivative of liquid smoke that has characteristics that are appropriate for a given use. DLSs are typically fractions of a liquid smoke that are prepared, for example, by processing a conventional liquid smoke through an evaporator, which separates and condenses the low boiling elements of the liquid smoke to produce the derivative of liquid smoke solution. Accordingly, the phrases "derivative of liquid smoke", "derivative", "liquid smoke fraction", and "fraction" are used interchangeably herein and refer to a component of a liquid smoke that has been isolated from the liquid smoke itself, either with or without subsequent additional preparation and/or modification steps. In some embodiments, a DLS is characterized by antimicrobial activity and does not impart smoky flavors to a food product when the food product is treated with the DLS.

As used herein, the phrase "ready-to-eat (RTE)" refers to food products that are prepared such that they can be consumed either immediately or after re-heating. Exemplary RTE foods include deli meats (e.g. turkey, roast beef, ham, chicken, salami, bologna, etc.), and hot dogs.

RTE food products can be contrasted with ready-to-cook food products. Ready-to-cook food products typically include raw, uncooked foodstuffs such as poultry, pork, and beef, and partially cooked/baked foods such as par-baked dough products. Exemplary ready-to-cook food products are poultry, pork, and beef (e.g. ground beef) and par-baked dough products such as bread and rolls. RTC food products can also include seafood, vegetables, and other minimally processed foods.

### II. Preparation of Liquid Smoke Derivatives from Liquid Smoke

As is well known to those skilled in the art, liquid smoke compositions obtained from pyrolysis of hardwood sawdust contain constituents primarily from the thermal degradation of cellulose, hemicellulose, and lignin. More particularly, the liquid smoke compositions contain a wide array of over 400 chemical compounds, and hence, liquid smoke compositions are characterized by their content of certain classes of compounds, namely, acids (% titratable acidity, determined using the method disclosed in U.S. Patent No. 6,214,395), phenolics, and carbonyls.

The acids are preservatives and pH control agents. Commercial liquid smoke compositions typically have a pH under about 2.5, and more typically under about 2.3, and a % titratable acidity by volume from about 3% to about 18%. The phenolics give a smoky flavor, and also aroma, to liquid smoke compositions, which typically have a phenolics content from about 10 to about 45, and more typically, from about 14 to about 30 mg/ml. The carbonyl s impart the brown color-forming capacity to liquid smoke compositions. The phenolics and the carbonyls can be measured as described in U.S. Patent No. 4,431,032, which describes techniques for the removal of an undesirable tar component from liquid smoke compositions. It is noted that the acids and carbonyls are secondary in contributing to the smoky flavor of liquid smoke compositions.

Mastertaste of Crossville, Tennessee is a manufacturer of various liquid smokes. Exemplary liquid smokes include ZESTI-SMOKE Code 1O and ZESTI-SMOKE Code V. The specifications of these liquid smokes are as follows:

| | Code 10 | Code V |
|---|---|---|
| Acidity (% w/v) | 10.5-11.0 | 6.8-7.8 |
| Staining Index | 69-80 | None |
| Carbonyl level (g/100mL) | 15-25 | 2.0-7.0 |
| Phenolic level (mg/mL) | 12-22 | 1.0-4.0 |
| Specific gravity (25°C) | 1.068-1.079 | 1.005-1.015 |
| Density (lbs/gal) | 8.90-8.99 | 8.37-8.46 |
| pH | 2-3 | 2.0-2.4 |
| Color | Amber | Amber |

The ZESTI-SMOKE Code V fraction utilized as a starting material by the presently disclosed subject matter can be produced as a derivative or secondary product of ZESTI-SMOKE Code 10. The Code 10 can be processed through a separator (for example, an AVP evaporator) by feeding the Code 10 as a feed stock which is first heated to remove low boiling acids from the top of the evaporator and then is condensed into Code V as a secondary product. This process also yields a concentrated liquid smoke that has higher percent acid, staining index, carbonyl and phenolic levels, specific gravity, density, and darker color than conventional liquid smoke, and that is sold under the trademark SUPERSMOKE™ by Mastertaste of Crossville, Tennessee for a variety of end uses.

The Code V derivative is a low pH, low flavor, low or no stain product. In some embodiments, Code V is then treated with a suitable pH adjustment agent, such as sodium bicarbonate, sodium carbonate, sodium hydroxide, or potassium hydroxide, in order to bring the pH up to at least about 5.0. The pH can be brought up to as high as about 7.0. In some embodiments, the pH ranges from about 5.0 to about 6.0. This pH-adjusted material can be further modified to produce a derivative of liquid smoke as disclosed herein.

In some embodiments, the Code V derivative is first treated with carbon in accordance with the method disclosed in U.S. Patent No. 5,637,339 to Moeller. This removes phenolics. The resultant is then treated with the suitable pH adjustment agent. Optionally, the pH adjustment can be performed prior to the carbon treatment. This carbon treated, pH adjusted material can also be used as a starting material for producing a derivative of liquid smoke as used herein.

In some embodiments, the sawdust is delignified prior to pyrolysis to produce low flavor products. Various of these products and derivatives can be blended together to produce a range of carbonyl levels. They can be carbon treated to substantially reduce phenolics. They can also be treated with neutralizing agents to adjust pH/acidity.

In the Examples presented below, various derivatives of liquid smoke were used to test the antimicrobial activity of DLSs versus bacteria, yeast, and mold.

### EXAMPLES

The following Examples have been included to illustrate modes of the presently disclosed subject matter. Certain aspects of the following Examples are described in terms of techniques and procedures found or contemplated by the present inventors to work well in the practice of the presently disclosed subject matter. These Examples illustrate standard practices of the inventors. In light of the present disclosure and the general level of skill in the art, those of skill will appreciate that the following Examples are intended to be exemplary only and that numerous changes, modifications, and alterations can be employed without departing from the scope of the presently disclosed subject matter.

### Example 1

### Preparation of Liquid Smoke Derivatives

Smokes 1, 2, and 5 were derived from primary condensates of smokes that had been substantially stripped of their phenolic content by various combinations of delignification and dephenolization as described herein. Smoke 3 was a standard version of a primary smoke condensate having the full complement of acids, carbonyls, and phenolics. Its strength was adjusted by dilution to have a titratable acidity similar to some of the other LS/DLS fractions for easier comparison. Smoke 4 (comparative) was an extract of the insoluble tar fraction that settled out of a typical primary smoke condensate. It was predominantly a high phenolic fraction with lesser amounts of titratable acidity and carbonyl compounds. It was rendered water-soluble by the addition of Polysorbate 80. The preparation of Smokes 6, 7, 8, and 9 involved various manipulations of the condensate from evaporation of a primary LS. These manipulations adjusted the products to have varying levels of titratable acidity, pH, and phenolics with little or no impact on carbonyl compositions.

A total of nine derivatives of liquid smoke were generated with the characteristics summarized in Table 1:

**Table 1**

| Smoke No. | Acidity* | pH | Phenolic content (mg/mL)** | Carbonyl content (mg/mL)*** |
|---|---|---|---|---|
| 1 | 4.5-5.9 | 2-3.0 | 0-5 | 151-200.9 |
| 2 | 0-1.4 | 6.1-7.0 | 0-5 | 101-150.9 |
| 3 | 6.0-7.4 | 2-3.0 | 0-5 | 101-150.9 |
| 4 | 3.0-4.4 | 4.1-5.0 | 20.1-25.0 | 0-50.9 |
| 5 | 6.0-7.4 | 2-3.0 | 0-5 | 101-150.9 |
| 6 | 6.0-7.4 | 2-3.0 | 0-5 | 51-100.9 |
| 7 | 1.5-2.9 | 5.1-6.0 | 0-5 | 51-100.9 |
| 8 | 0-1.4 | 6.1-7.0 | 0-5 | 101-150.9 |
| 9 | 0-1.4 | 6.1-7.0 | 0-5 | 51-100.9 |

| | | | | |
|---|---|---|---|---|
| * Quantified as acetic acid ** Quantified as 2,6-dimethoxy phenol *** Quantified as 2-butanone | | | | |

### Example 2

### MIC Values Against Gram-Neaative Bacteria

Derivatives of liquid smoke 1-9 from Example 1 were used in broth or agar dilution methods against a cocktail of Gram-negative bacteria. The cocktail included *Salmonella muenster*, *Salmonella seftenberg*, *Salmonella typhimurium*, and *E. coli* 8677. 1000 cells of each bacterial species were used to inoculate various dilutions (dilutions are presented as v/v%) of the smoke fractions.

In order to determine the minimum inhibitory concentrations for each of the fractions, appropriate inoculations were then carried out to TSB containing different percentages of derivatives of liquid smoke in a test tube. The test tubes were incubated at 37°C for 24 and 48 hours and scored for growth/no growth. The MIC values were conducted in triplicate and repeated three times for each. The MIC values are presented in Table 2.

**Table 2**

| MIC Values Against Gram-Neqative Cocktail | |
|---|---|
| Smoke Number | MIC Value |
| 1 | 1.5% |
| 2 | >2.00% |
| 3 | 2.00% |
| 4 | 3.00% |
| 5 | 2.00% |
| 6 | 2.00% |
| 7 | 5.00% |
| 8 | >2.00% |
| 9 | 9.00% |

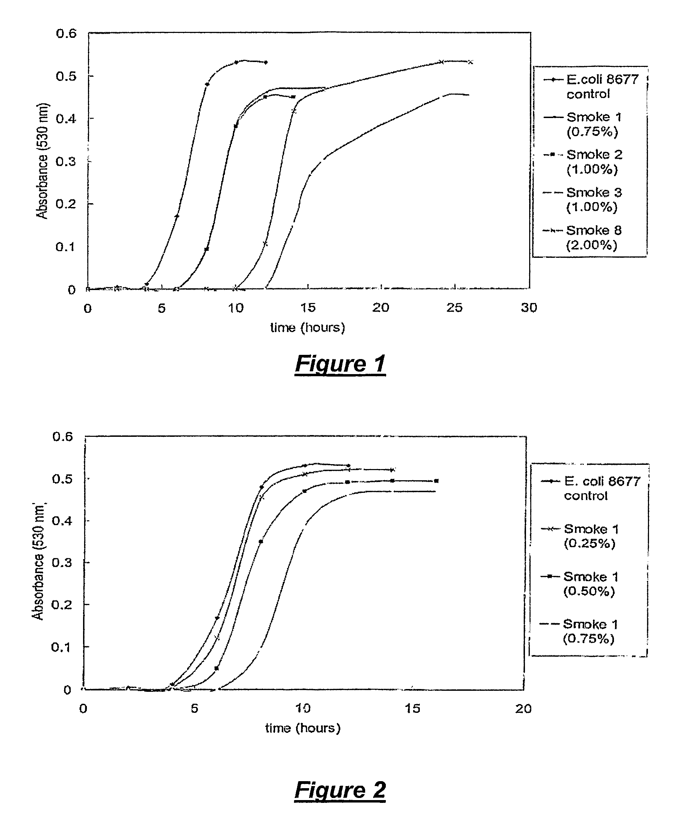

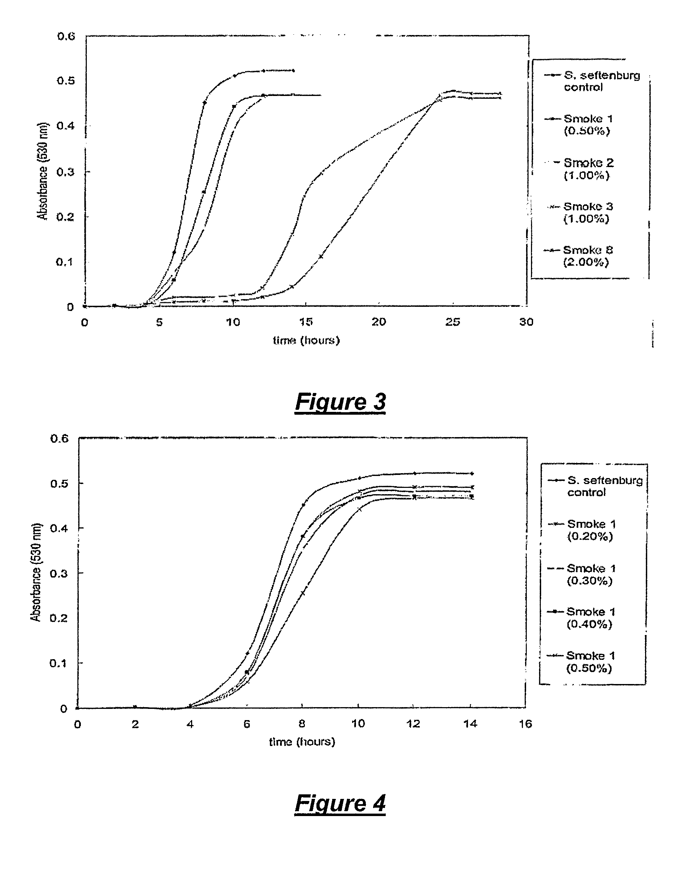

Growth curves were constructed below the predetermined MIC levels for selected derivatives of liquid smoke (DLS) for several bacterial strains individually. The growth curves presented in Figures 1-4 each represents the average of three replicates.

### Example 3

### MIC Values Against Gram-Positive Bacteria

Derivatives of liquid smoke 1-9 were also tested against a Gram-positive bacterium (*Listeria innocua* M1) using the techniques described in Example 2. The MIC values are presented in Table 3.

**Table 3**

| MIC Values of Liquid Smokes Against *Listeria innocua* M1 | |
|---|---|
| 1 | 1.50% |
| 2 | 2.00% |
| 3 | >2.00% |
| 4 | 2.00% |
| 5 | 2.00% |
| 6 | 2.00% |
| 7 | 4.00% |
| 8 | 2.00% |
| 9 | 6.00% |

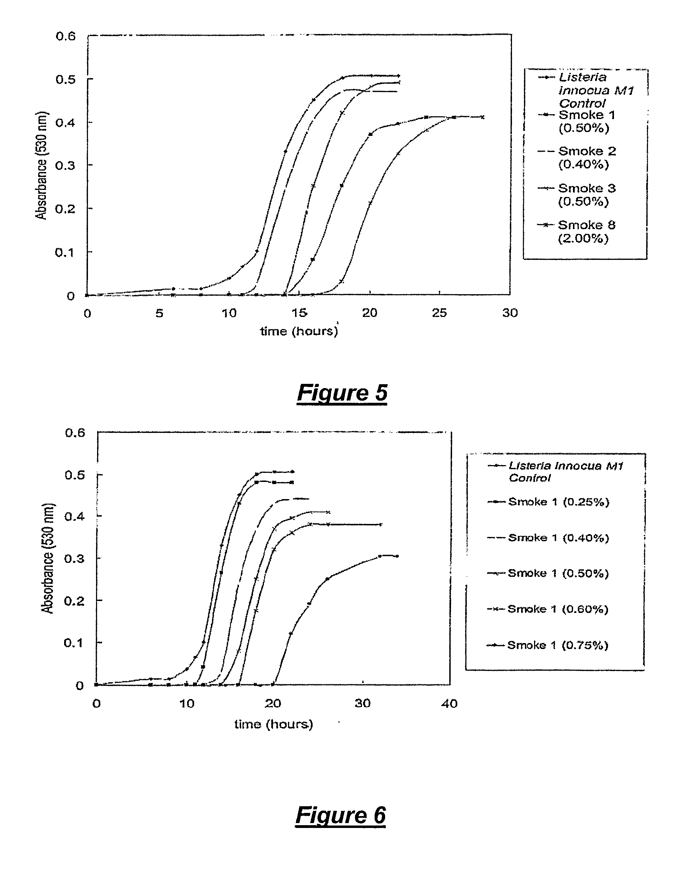

Growth curves were constructed below the predetermined MIC levels for selected derivatives of liquid smoke (DLS) for *Listeria innocua* M1. The growth curves presented in Figures 5-6 each represents the average of three replicates.

### Example 4

### MIC Values Against Yeast

Derivatives of liquid smoke (DLSs) 1, 2, 3, and 8 were also tested against *Saccharomyces cerevisiae* using the techniques described in Example 2, except that malt extract broth (MEB) was used instead of TSB. The MIC values were 1.5% for each DLS.

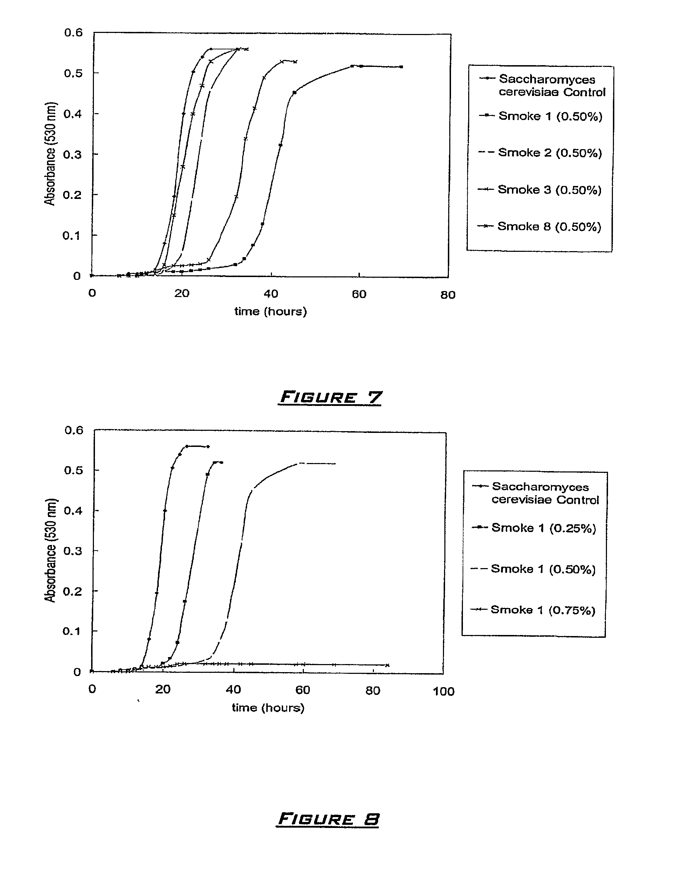

Growth curves were constructed for DLSs 1, 2, 3, and 8 at 0.50%, and for DLS 1 at 0.25%, 0.5%, and 0.75%, for *Saccharomyces cerevisiae*. The growth curves presented in Figures 7-8 each represents the average of three replicates.

### Example 5

### MIC Values Against a Representative Fungus

Derivatives of liquid smoke 1, 2, 3, and 8 were also tested against *Aspergillus niger* using the techniques described in Example 2, except that instead of inoculating 1000 cells to each DLS dilution, an equal volume of A. *niger* spores was added to potato dextrose agar (PDA). The MIC values are presented in Table 4.

**Table 4**

| MIC Values of Liquid Smokes Against *A. niger* | |
|---|---|
| 1 | 1.50% |
| 2 | 2.50% |
| 3 | 2.50% |
| 8 | >5.00% |

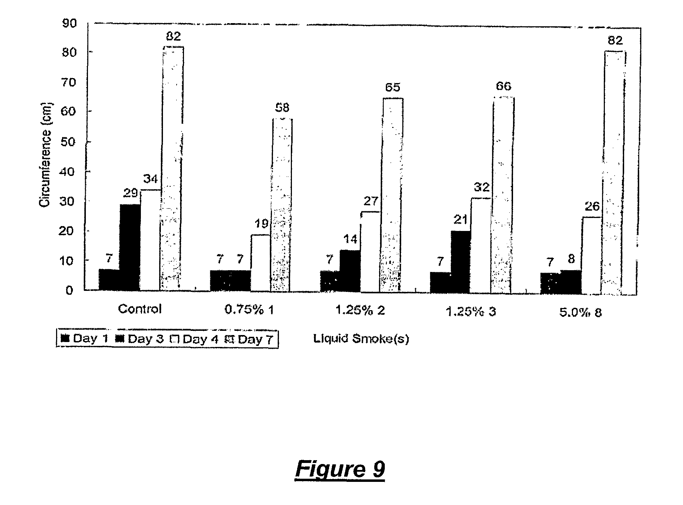

As a proxy for growth curves, the circumference of *A. niger* spores was measured at 37°C for DLS 1 at 0.75%, DLS 2 at 1.25%, DLS 3 at 1.25%, and DLS 8 at 5.0%, at days 1, 3, 4, and 7 of treatment. The data are presented in Figure 9.

### Discussion of Examples 1-5

As is disclosed hereinabove and in the Figures, components of smoke possess antimicrobial properties. While different smoke condensates behave somewhat differently against different microorganisms, with some exceptions, the data presented suggest a general correlation between acidity and pH on MIC values. Interestingly, these data also suggest that carbonyls contribute to the antimicrobial efficacy against Gram-negative bacteria, Gram-positive bacteria, yeast, and fungi. MIC values may also be influenced by the compensation of one variable over another (e.g. carbonyls vs. phenolics, and vice versa).

### Example 6

### Mold Inhibition on Baked Tough Products

Par-baked dinner rolls were purchased two days before the expiration date on the package. On the day before expiration, they were sprayed lightly with a 30% solution of Smoke 1, packaged, and held at room temperature. Pick-up level was 1.5% to 2% to ensure coverage. Rolls were observed beginning 24 hours after treatment (i.e. on the expiration date).

The results are depicted in Figures 14A-14E. Dark spots show the growth of mold colonies. Treatment resulted in a one week incremental shelf life.

### Example 7

### Validation of Liquid Smoke-Treated Ready-to-Eat (RTE) Meat Products for Control of Listeria innocua M1

RTE high end (whole breast parts formed to have no more than 40% binders and broth added) and low end (minced turkey breast parts that can have up to 60% binders and broth added before forming and cooking) turkey rolls and roast beef cuts from a commercial manufacturer were used to test the ability of smoke fractions to control *L. innocua* M1 infection over the course of 4 weeks. The turkey products ranged from 3.5 to 4.5 kg and were cooked in hot water in shrinkable cook-in bags to an internal temperature of 71°C followed by cooling in water to an internal temperature of 7°C. Each piece of the roast beef was about 1 kg and was in case-ready shrink film packages, and was used as a unit. The turkey rolls were each cut into 4 sections, with each section considered a unit.

Four different derivatives of liquid smoke (DLSs) were obtained from Mastertaste of Crossville, Tennessee, United States of America. Each meat was dipped in 100% DLS and remained submerged for at least 60 seconds. After removal, the meats were allowed to air dry over a screen at room temperature for no less than 5 minutes before they were inoculated with L. *innocua* M1 (obtained from Dr. P. M. Foegeding, North Carolina State University, Raleigh, North Carolina, United States of America).

For each piece of meat, two 25 cm² areas on the surface (marked with food grade ink using a sterile template) were inoculated with 100 CFU of L. *innocua* M1 in 50 µL from an actively growing (18 hour) culture to obtain a total inoculum of 100 CFU/25 cm². Each piece was then placed in a CRYOVAC® barrier bag (available from CRYOVAC® Food Packaging of Duncan, South Carolina, United States of America), vacuum-sealed, and placed at 4°C.

Viable *L. innocua* M1 were evaluated at 0, 2, and 4 weeks at 4°C. The marked area was aseptically excised and transferred to a stomacher bag. 100 mL of 0.1% sterile peptone water (PW) was added and the mixture was stomached for 2 minutes. Aliquots were removed and directly plated or dilutions made and enumerated. Enumeration of viable *L. innocua* M1 cells was done by direct spiral plating methods on an AUTOPLATE® 4000 (available from Spiral Biotech, Inc. of Norwood, Massachusetts, United States of America) using DIFCO™ TSA (available from Difco Laboratories, Inc. of Detroit, Michigan, United States of America) supplemented with 250 mg/L of streptomycin and 50 mg/mL rifampicin. There were three batches of each RTE product (high end and low end turkey, and roast beef cut) with 15 tests conducted on each batch. Three samples from each batch served as positive controls (no DLS treatment), one for each sampling time. Data are presented as an average of CFU from the two designated areas on each product and two samples of purge in Tables 5-7.

**Table 5**

| Viable Cells on Low End Turkey Roll | | |
|---|---|---|
| **Treatment** | **Purge (CFU/mL)** | **Log₁₀ (CFU/25 cm²)** |
| | time = 0 weeks | |
| Control | - | 2.06 ± 0.13 |
| DLS 1 | - | 2.06 ± 0.16 |
| DLS 1 | - | 2.02 ± 0.12 |
| DLS 2 | - | 2.18 ± 0.15 |
| DLS 8 | - | 2.19 ± 0.08 |

| | time = 2 weeks | |
|---|---|---|
| Control | 7.90 ± 0.65* | 3.60 ± 0.32* |
| DLS 1 | ND | ND |
| DLS 1 | ND | ND |
| DLS 2 | ND | ND |
| DLS 8 | ND | 1.65 ± 0.18* |

| | time = 4 weeks | |
|---|---|---|
| Control | 7.80 ± 0.66* | 4.71 ± 0.48* |
| DLS 1 | ND | ND |
| DLS 1 | ND | ND |
| DLS 2 | ND | ND |
| DLS 8 | ND* | ND |

| | | |
|---|---|---|
| * Indicates a positive identification of *Listeria innocua* M1 after enrichment as per the United States Department of Agriculture's Section 36.512 enrichment procedure for isolation of *L. monocytogenes*. All other samples tested were negative after enrichment (tests not performed at time = 0 weeks). ND: not detectable (less than 10 CFU/mL). | | |

**Table 6**

| Viable Cells on High End Turkey Roll | | |
|---|---|---|
| **Treatment** | **Purge (CFU/mL)** | **Log₁₀ (CFU/25 cm²)** |
| | time = 0 weeks | |
| Control | - | 2.13 ± 0.18 |
| DLS 1 | - | 2.24 ± 0.15 |
| DLS 1 | - | 2.13 ± 0.17 |
| DLS 2 | - | 2.08 ± 0.12 |
| DLS 8 | - | 2.22 ± 0.15 |

| | time = 2 weeks | |
|---|---|---|
| Control | 5.54 ± 0.45* | 3.81 ± 0.31* |
| DLS 1 | ND | ND |
| DLS 1 | ND | ND |
| DLS 2 | ND | ND |
| DLS 8 | ND | ND* |

| | time = 4 weeks | |
|---|---|---|
| Control | 6.26 ± 0.45* | 4.57 ± 0.45* |
| DLS 1 | ND | ND |
| DLS 1 | ND | ND |
| DLS 2 | ND | ND |
| DLS 8 | ND | ND* |

| | | |
|---|---|---|
| * Indicates a positive identification of *Listeria innocua* M1 after enrichment as per the United States Department of Agriculture's Section 36.512 enrichment procedure for isolation of *L. monocytogenes.* All other tests were negative after enrichment. -: not determined (no purge at day 0); ND: not detectable (less than 10 CFU/mL). | | |

**Table 7**

| Viable Cells on Top Round Roast Beef | | |
|---|---|---|
| **Treatment** | **Purge (CFU/mL)** | **Log₁₀ (CFU/25 cm²)** |
| | time = 0 weeks | |
| Control | - | 2.07 ± 0.11 |
| DLS 1 | - | 2.06 ± 0.11 |
| DLS 1 | - | 2.08 ± 0.11 |
| DLS 2 | - | 2.12 ± 0.16 |
| DLS 8 | - | 2.10 ± 0.12 |

| | time = 2 weeks | |
|---|---|---|
| Control | 6.99 ± 0.48* | 4.33 ± 0.44* |
| DLS 1 | ND | ND |
| DLS 1 | ND | ND |
| DLS 2 | ND | ND |
| DLS 8 | ND* | ND |

| | time = 4 weeks | |
|---|---|---|
| Control | 7.96 ± 0.68* | 4.49 ± 0.45* |
| DLS 1 | ND | ND |
| DLS 1 | ND | ND |
| DLS 2 | ND | ND |
| DLS 8 | ND* | ND |

| | | |
|---|---|---|
| * Indicates a positive identification of *Listeria innocua* M1 after enrichment as per the United States Department of Agriculture's Section 36.512 enrichment procedure for isolation of L. *monocytogenes.* All other tests were negative after enrichment. ND: not detectable (less than 10 CFU/mL). | | |

### Example 8

### Antimicrobial Effects of DLSs After Low-Level Inoculation of Deli Meats with Listeria Monocytogenes

A bacterial composite containing equal numbers of three strains of *Listeria monocytogenes* (SLR10,1/2a; SLR31,1/2b; and SLR1234, 4b Scott A; available from Silliker, Inc. of South Holland, Illinois, United States of America) was employed to test the antimicrobial activity of DLSs Smoke 8 and Smoke 2 on food products. Approximately 1000-10,000 CFU were inoculated onto ham, roast beef, hot dogs, and turkey samples. The inoculum was spread over the surface of the food products using a sterile loop, and allowed to dry for 15 minutes. Individual pieces of each deli style meat product were dipped into Smoke 8 or Smoke 2 for 15 seconds and allowed to drip for 1 minute to remove excess liquid. The products were then packaged in a heat-sealed packaging, and stored at 4°C. Individual samples were analyzed at days 0, 1, 2, 5, 10, 30, 60, 90, and/or 120 days. Both the meat itself and any exudate will be tested. The data presented in Figures 15-18 represent the average of three replicates at each time point.

As shown in Figure 15, both Smoke 8 and Smoke 2 inhibited the growth of *Listeria* on hot dogs, with the Smoke 2-treated samples showing no detectable *Listeria* after day 2 through and including day 90. The *Listeria* titer on the Smoke 8 treated hot dogs decreased though day 30.

As shown in Figure 16, both Smoke 8 and Smoke 2 resulted in inhibition of *Listeria* growth on roast beef up to and including day 10.

Smoke 8 and Smoke 2 also inhibited the growth of *Listeria* on ham. As shown in Figure 17, for the Smoke 8-treated ham, the bacterial titer generally diminished through day 10. Smoke 2 treatment resulted in undetectable *Listeria* levels up to and including day 10.

Figure 18 shows the results of treating turkey with Smoke 8 and Smoke 2. Here again, treatment with each product resulted in reduced or undetectable bacterial levels through day 10.

Summarily, treatment of these RTE food products with DLS fractions Smoke 8 and Smoke 2 resulted in an increased shelf life of at least 10 days.

### Example 9

### Antimicrobial Effects of DLSs After High-Level Innoculation of Deli Meats with Listeria Monocytogenes

The experiments described in Example 8 were repeated, but this time the initial inoculation was between 10⁵ and 10⁷ CFU for each food product. The test products were inoculated with *Listeria monocytogenes*. The Listeria cocktail was made by combining equal portions of five USDA-recognized Listeria strains that were 12 to 18 hours old. To inoculate the test products, 0.1 ml of the Listeria cocktail was placed on the products with a micropipetor. The data presented in Figures 19-22 represent three replicates at each time point.

Figure 19 shows the results of inoculating hot dogs with about 10⁵ CFU of *Listeria.* Treatment with Smoke 8 resulted in an approximately 1 log decrease in bacterial titer by about day 10, which was maintained for about an additional 6 weeks. Smoke 2, on the other hand, resulted in undetectable bacteria by day 2, which remained below the level of detection through day 60.

Figure 20 shows the results of treating roast beef that had been inoculated with about 10⁶ CFU of *Listeria* with Smoke 8 and Smoke smoke 8 treatment resulted in an inhibition of growth through day 60. Smoke 2 treatment resulted in a greater than 1 log reduction in bacterial titer by day 1, and a greater than 2 log reduction by day 22, which persisted through day 60.

Figure 21 shows the results of treating ham that had been inoculated with about 5 x 10⁶ CFU of *Listeria* with Smoke 8 and Smoke 2. Smoke 8 treatment resulted in an inhibition of growth through day 5. Smoke 2 treatment resulted in a greater than 1 log reduction in bacterial titer by day 1, which persisted through day 45.

Figure 22 shows the results of treating turkey that had been inoculated with about 10⁶ CFU of *Listeria* with Smoke 8 and Smoke 2. Smoke 8 treatment resulted in an approximately 1 log reduction by day 2. Smoke treatment resulted in a greater than 2 log reduction in bacterial titer by day 1, which persisted through day 10.

### Example 10

### Antimicrobial Details of 100% Liquid Smoke and Pyrolysis Condensates

Hot dogs purchased from a commercial source were treated with 100% liquid smoke (Smoke 2; Mastertaste) and/or steam pasteurized (1 minute at 165°F). Hot dogs were dipped in Smoke 2 for 2 minutes and allowed to drip for 60 seconds to remove excess liquid. A second set of control hot dogs was set aside without treatment. Then they were inoculated with a four-strain cocktail of Listeria monocytogenes. Samples were vacuum-packaged in suitable plastic films. A portion of the hotdogs from each set (treated and untreated) was subjected to a heat pasteurization step (1 minute at 165°F). Trials were done in triplicate and samples were held at 50°F (abuse temperature). The results presented in Figure 23 showed that heat alone resulted in a 2.8-log reduction of Listeria *monocytogenes* that recovered quickly to high levels. This was interesting, but not unexpected as the 50°F holding temperature was excessive abuse. However, it was most notable that despite the high hold temperature, Smoke 2 alone was able to render an approximately 2-log reduction of L. *monocytogenes* that held for the 6-week test period.

The combination treatment with both liquid smoke and heat had an initial effect that was similar to that seen with heat alone. However, the liquid smoke treatment prevented the rapid recovery of the bacterium seen with heat alone. Additionally, the bacterial titer continued to diminish through about 3 weeks, reaching a final reduction of about 7 logs and remained at that level for the duration of the test period.

### Materials and Methods for Example 11

Inoculum Preparation. A four-strain cocktail of *Listeria monocytogenes* (109, 108M, serotype 4c, serotype 3) was used for surface inoculation of restructured, skinless turkey breast. Inoculum was prepared from slants after two consecutive transfers to TSB bottles (available from Difco Laboratories, Inc.) in 5 mL tubes and subsequently to 100 mL TSB centrifugation bottles. Stationary phase cultures (20 hours) were centrifuged at 1 0,000g in a Beckman J2-21 M/E centrifuge using a JA-14 rotor (available from Beckman Coulter Inc. of Fullerton, California, United States of America) at 4°C for 10 minutes, washed with sterile 0.1 % peptone water (PW), and the four strains (about 10⁹ CFU/mL) were combined in equal volumes (50 mL each) and used for mist inoculation. Inoculum levels were determined by direct plating on Modified Oxford Agar (MOX, available from Oxoid Ltd., of Basingstoke, Hampshire, England) using a Whitley spiral plater (available from Don Whitley Scientific Ltd., of Shipley, West Yorkshire, England) and incubated at 37°C for 24 hours. After incubation, typical black colonies were count and recorded as log₁₀ CFU/mL for inoculum level.

Product Inoculation and Treatment. The product casings were removed aseptically, and the products were placed on a tray and mist inoculated with the four strain cocktail in a bio-containment chamber. The products were held for 15 minutes to allow attachment of the *L. monocytogenes.* Treatments requiring application of DLSs were sprayed with the DLSs (50 mL/turkey breast) using a garden sprayer. The inoculated, treated product was then vacuum packaged and pasteurized at the Kansas State University Aseptic Processing Laboratory (Manhattan, Kansas, United States of America) in a Townsend post-process pasteurizer (available from Townsend of Des Moines, Iowa, United States of America) at 96°C for either 1, 2, or 3 minutes. Pasteurized products were then chilled in an ice water bath for 15 minutes and sampled using a surface-coring device.

Sampling for residual *L. monocytogenes.* After pasteurization and chilling, the inoculated product was sampled by aseptically removing the product from the package and coring both the top and the bottom surfaces (2 per side). The surface core samples were then mixed with 50 mL of 0.1 % PW in a stomacher bag and homogenized (Tekmar Co. of Cincinnati, Ohio, United States of America) for 2 minutes. The homogenized samples were then serially diluted in 0.1% PW and plated onto MOX and TSA. The plates were incubated at 37°C for 245 hours. Enumeration was performed by counting typical black colonies on MOX and TSA (used for recovery of heat injured cells). The counts were reported as log₁₀ CFU/cm².

### Example 11

### Combination DLS/Heat Treatment of RTE Meats

To evaluate the destruction of surface inoculated *Listeria monocytogenes* by DLS alone or in combination with saturated steam, a three-by-four experimental design was employed. Three DLS treatments (control, Smoke 1, and Smoke 2) were used, and four heat treatments (0, 1, 2, and 3 minutes) as described in the section above entitled "Materials and Methods for Example 11 ".

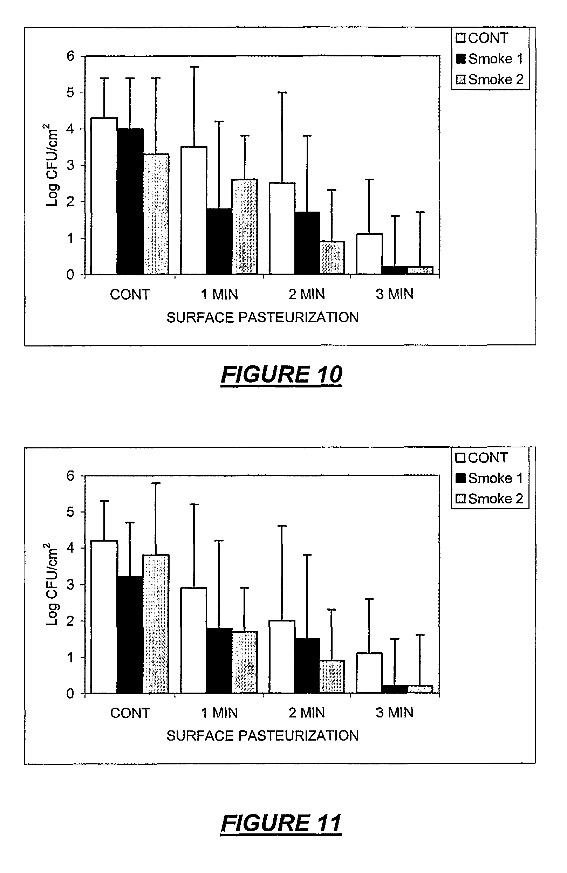

Spray inoculation of restructured turkey breast products resulted in surface *L. monocytogenes* populations of 4.17 log₁₀ CFU/cm² (Figures 10 and 11). Exposure to saturated steam for 1, 2, or 3 minutes in a Townsend post-process surface pasteurizer resulted in reductions of 1.08, 2.01, and 2.92 log₁₀ CFU/cm², respectively. Spray treatment of inoculated turkey breast with DLS resulted in reductions of 0.94 and 0.41 log₁₀ CFU/cm² for Smoke 1 and Smoke 2 respectively, from control. Spray treatment of inoculated turkey breast product with Smoke 1 and subsequent exposure to saturated steam resulted in greater reductions of surface *L. monocytogenes* populations with 2.17, 2.37, and 3.57 log₁₀ CFU/cm² reductions (1, 2, and 3 minutes steam exposure, respectively). Similar reductions (2.30, 3.11, and 3.54 log₁₀ CFU/cm²) were observed with Smoke 2 plus steam treatments.

### Discussion of Example 11

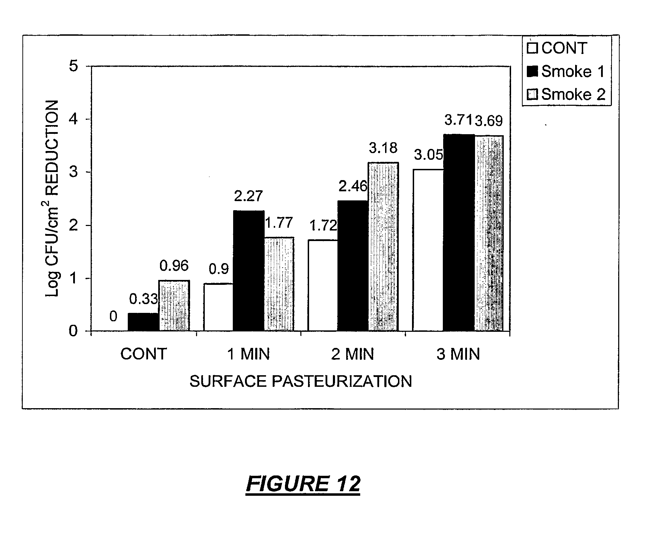

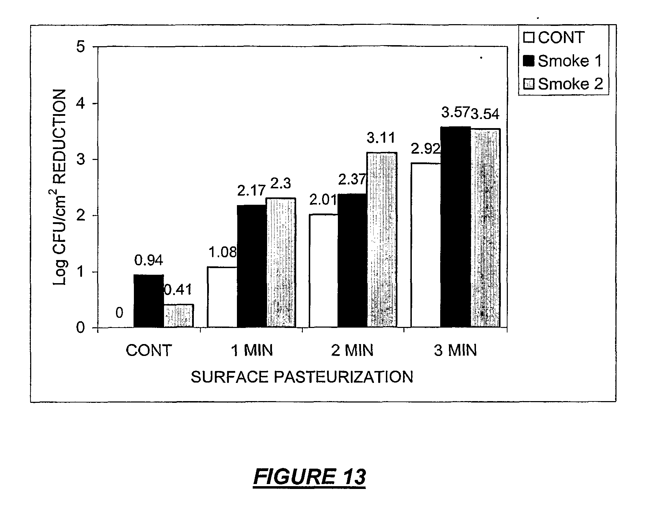

While surface spray treatment of processed turkey breast product resulted in reductions of *L. monocytogenes*, the combination of surface smoke application and surface heat treatment provided greater reductions than either treatment alone (Figures 12 and 13). While the combination treatments provided greater reductions, the mean reductions were greater for product treated with DLS and pasteurized for 1 minute.

It will be understood that various details of the presently disclosed subject matter can be changed without departing from the scope of the presently disclosed subject matter. Furthermore, the foregoing description is for the purpose of illustration only, and not for the purpose of limitation.

## Claims

1. A method for inhibiting growth of a microorganism in a food product, the method comprising treating the food product with a derivative of liquid smoke that imparts no smoke flavoring to the food product, wherein the derivative of liquid smoke comprises:
(a) titratable acidity in a concentration of 0 to 6% weight per unit volume (w/v);
(b) at least 10% weight per unit volume (w/v) carbonyl;
(c) phenolics in a concentration of less than 0.5 % weight per unit volume (w/v);
(d) water in a concentration of less than 97% weight per unit volume (w/v); and has
(e) a pH of at least 3.0,
whereby growth of a microorganism is inhibited.

2. The method of claim 1, wherein the microorganism is selected from the group consisting of a bacterium, a yeast, and a fungus.

3. The method of claim 2, wherein the bacterium is a strain of *Streptococcus*, *Shigella*, *Hafnia*, *Enterobacter*, *Serratia*, *Staphylococcus*, *Pseudomonas*, *Citrobacter*, *Klebsiella*, *Escherichia coli*, *Listeria*, or *Salmonella*.

4. The method of claim 2, wherein the yeast is a strain of *Saccharomyces.*

5. The method of claim 2, wherein the fungus is a strain of *Aspergillus.*

6. The method of claim 1, wherein the food product is a ready-to-eat food product.

7. The method of claim 6, wherein the ready-to-eat food product comprises poultry, pork, beef, seafood, or a baked dough product.

8. The method of claim 1, wherein the food product is a ready-to-cook food product.

9. The method of claim 8, wherein the ready-to-cook food product comprises poultry, pork, beef, seafood, fresh vegetables, or a par-baked dough product.

10. The method of claim 1, wherein the derivative of liquid smoke comprises carbonyl in a concentration to 12% weight per unit volume (w/v), and a pH of 5.0 to 6.0.

11. The method of claim 1, wherein the pH is between 4.5 and 6.5.

12. The method of claim 1, wherein the derivative of liquid smoke is produced by processing liquid smoke through an evaporator to separate and condense the low boiling elements thereof to produce the derivative of liquid smoke.

13. The method of claim 1, wherein the derivative of liquid smoke is sprayed onto the food product.

14. The method of claim 1, wherein the food product is dipped into a bath of the derivative of liquid smoke.

15. The method of claim 1, further comprising heating the food product to at least 73.9°C (165°F) for at least 1 minute.

16. The method of claim 15, wherein the heating step is performed after the treating step.

17. The method of claim 1, wherein the derivative of liquid smoke further comprises an additional wetting agent.

18. The method of claim 17, wherein the additional wetting agent comprises polysorbate.

19. An antimicrobial derivative of liquid smoke, wherein the derivative of liquid smoke:
(i) comprises
(a) titratable acidity in a concentration of 0 to 6% weight per unit volume (w/v);
(b) carbonyl of at least 10% weight per unit volume (w/v);
(c) phenolics in a concentration of less than 0.5 % weight per unit volume (w/v);
(d) water in a concentration of less than 97% weight per unit volume (w/v); and has
(e) a pH of at least 3.0;
(ii) imparts no smoke flavor to a food product when the food product is treated with the derivative of liquid smoke; and
(iii) inhibits growth on a food product of a microorganism selected from the group consisting of *Streptococcus*, *Shigella*, *Hafnia*, *Enterobacter*, *Serratia*, *Staphylococcus*, *Pseudomonas*, *Citrobacter*, *Klebsiella*, *Escherichia coli*, *Listeria*, *Salmonella*, *Saccharomyces*, and *Aspergillus* when the food product is treated with the derivative of liquid smoke.

20. The antimicrobial derivative of liquid smoke of claim 19, wherein the pH is between 4.5 and 6.5.

21. The antimicrobial derivative of liquid smoke of claim 19, wherein the derivative of liquid smoke comprises carbonyl in a concentration to 12% weight per unit volume (w/v) and a pH of 5.0 to 6.0.

22. The antimicrobial derivative of liquid smoke of claim 19, wherein the food product is a ready-to-eat food product.

23. The antimicrobial derivative of liquid smoke of claim 22, wherein the ready-to-eat food product comprises poultry, pork, beef, seafood, or a baked dough product.

24. The antimicrobial derivative of liquid smoke of claim 19, wherein the food product is a ready-to-cook food product.

25. The antimicrobial derivative of liquid smoke of claim 24, wherein the ready-to-cook food product comprises poultry, pork, or beef, seafood, or a par-baked dough product.

26. The antimicrobial derivative of liquid smoke of claim 19, wherein the derivative of liquid smoke comprises an additional wetting agent.

27. The antimicrobial derivative of liquid smoke of claim 26, wherein the additional wetting agent comprises polysorbate.

## Patentansprüche

1. Verfahren zum Hemmen des Wachstums eines Mikroorganismus in einem Lebensmittelprodukt, wobei das Verfahren umfasst, das Lebensmittelprodukt mit einem Derivat aus flüssigem Rauch zu behandeln, der kein Raucharoma an das Lebensmittelprodukt überträgt, wobei das Derivat aus flüssigem Rauch Folgendes enthält:
(a) titrierbare Azidität in einer Konzentration von 0 bis 6 Gewichts-% pro Volumeneinheit (w/v);
(b) mindestens 10 Gewichts-% pro Volumeneinheit (w/v) Carbonyl;
(c) Phenole in einer Konzentration von weniger als 0,5 Gewichts-% pro Volumeneinheit (w/v);
(d) Wasser in einer Konzentration von weniger als 97 Gewichts-% pro Volumeneinheit (w/v); und
(e) einen pH-Wert von mindestens 3,0 besitzt,
wodurch das Wachstum eines Mikroorganismus gehemmt wird.

2. Verfahren nach Anspruch 1, wobei der Mikroorganismus aus der Gruppe ausgewählt ist, die aus einem Bakterium, einer Hefe und einem Pilz besteht.

3. Verfahren nach Anspruch 2, wobei das Bakterium ein Stamm von Streptococcus, Shigella, Hafnia, Enterobacter, Serratia, Staphylococcus, Pseudomonas, Citrobacter, Klebsiella, Escherichia coll, Listeria, oder Salmonella ist.

4. Verfahren nach Anspruch 2, wobei die Hefe ein Stamm von *Saccharomyces* ist.

5. Verfahren nach Anspruch 2, wobei der Pilz ein Stamm von *Aspergillus* ist.

6. Verfahren nach Anspruch 1, wobei das Lebensmittelprodukt ein verzehrfertiges Lebensmittelprodukt ist.

7. Verfahren nach Anspruch 6, wobei das verzehrfertige Lebensmittelprodukt Geflügelfleisch, Schweinefleisch, Rindfleisch, Meeresfrüchte oder ein gebackenes Teigprodukt umfasst.

8. Verfahren nach Anspruch 1, wobei das Lebensmittelprodukt ein kochfertiges Lebensmittelprodukt ist.

9. Verfahren nach Anspruch 8, wobei das kochfertige Lebensmittelprodukt Geflügelfleisch, Schweinefleisch, Rindfleisch, Meeresfrüchte, Frischgemüse oder ein vorgebackenes Teigprodukt umfasst.

10. Verfahren nach Anspruch 1, wobei das Derivat aus flüssigem Rauch Carbonyl in einer Konzentration bis 12 Gewichts-% pro Volumeneinheit (w/v) umfasst und einen pH-Wert von 5,0 bis 6,0 besitzt.

11. Verfahren nach Anspruch 1, wobei der pH-Wert zwischen 4,5 und 6,5 beträgt.

12. Verfahren nach Anspruch 1, wobei das Derivat aus flüssigem Rauch hergestellt wird, indem flüssiger Rauch durch einen Verdampfer verarbeitet wird, um seine niedrig-siedenden Elemente abzutrennen und zu kondensieren, um das Derivat aus flüssigem Rauch herzustellen.

13. Verfahren nach Anspruch 1, wobei das Derivat aus flüssigem Rauch auf das Lebensmittelprodukt gesprüht wird.

14. Verfahren nach Anspruch 1, wobei das Lebensmittelprodukt in ein Bad des Derivats aus flüssigem Rauch getaucht wird.

15. Verfahren nach Anspruch 1, das des Weiteren umfasst, das Lebensmittelprodukt mindestens 1 Minute lang auf mindestens 73,9 °C (165 °F) zu erhitzen.

16. Verfahren nach Anspruch 15, wobei der Erhitzungsschritt nach dem Behandlungsschritt ausgeführt wird.

17. Verfahren nach Anspruch 1, wobei das Derivat aus flüssigem Rauch des Weiteren ein zusätzliches Netzmittel enthält.

18. Verfahren nach Anspruch 17, wobei das zusätzliche Netzmittel Polysorbat enthält.

19. Antimikrobielles Derivat aus flüssigem Rauch, wobei das Derivat aus flüssigem Rauch
(i) Folgendes enthält:
(a) titrierbare Azidität in einer Konzentration von 0 bis 6 Gewichts-% pro Volumeneinheit (w/v);
(b) Carbonyl von mindestens 10 Gewichts-% pro Volumeneinheit (w/v);
(c) Phenole in einer Konzentration von weniger als 0,5 Gewicht pro Volumeneinheit (w/v);
(d) Wasser in einer Konzentration von weniger als 97 Gewichts-% pro Volumeneinheit (w/v); und
(e) einen pH-Wert von mindestens 3,0 besitzt;
(ii) kein Raucharoma an ein Lebensmittelprodukt überträgt, wenn das Lebensmittelprodukt mit der Derivat aus flüssigem Rauch behandelt wird; und
(iii) das Wachstum eines Mikroorganismus auf einem Lebensmittelprodukt hemmt, wobei der Mikroorganismus aus folgender Gruppe ausgewählt ist: *Streptococcus, Shigella, Hafnia, Enterobacter, Serratia, Staphylococcus, Pseudomonas, Citrobacter, Klebsiella, Escherichia coli, Listeria, Salmonella, Saccharomyces und Aspergillus*, wenn das Lebensmittelprodukt mit dem Derivat aus flüssigem Rauch behandelt wird.

20. Antimikrobielles Derivat aus flüssigem Rauch nach Anspruch 19, wobei der pH-Wert zwischen 4,5 und 6,5 beträgt.

21. Antimikrobielles Derivat aus flüssigem Rauch nach Anspruch 19, wobei das Derivat aus flüssigem Rauch Carbonyl in einer Konzentration bis 12 Gewichts-% pro Volumeneinheit (w/v) enthält und einen pH-Wert von 5,0 bis 6,0 besitzt.

22. Antimikrobielles Derivat aus flüssigem Rauch nach Anspruch 19, wobei das Lebensmittelprodukt ein verzehrfertiges Lebensmittelprodukt ist.

23. Antimikrobielles Derivat aus flüssigem Rauch nach Anspruch 22, wobei das verzehrfertige Lebensmittelprodukt Geflügelfleisch, Schweinefleisch, Rindfleisch, Meeresfrüchte oder ein gebackenes Teigprodukt umfasst.

24. Antimikrobielles Derivat aus flüssigem Rauch nach Anspruch 19, wobei das Lebensmittelprodukt ein kochfertiges Lebensmittelprodukt ist.

25. Antimikrobielles Derivat aus flüssigem Rauch nach Anspruch 24, wobei das kochfertige Lebensmittelprodukt Geflügelfleisch, Schweinefleisch oder Rindfleisch, Meeresfrüchte oder ein vorgebackenes Teigprodukt umfasst.

26. Antimikrobielles Derivat aus flüssigem Rauch nach Anspruch 19, wobei das Derivat aus flüssigem Rauch ein zusätzliches Netzmittel enthält.

27. Antimikrobielles Derivat aus flüssigem Rauch nach Anspruch 26, wobei das zusätzliche Netzmittel Polysorbat enthält.

## Revendications

1. Procédé pour inhiber la croissance d'un microorganisme dans un produit alimentaire, le procédé comprenant le traitement du produit alimentaire avec un dérivé de fumée liquide qui n'impartit pas de goût de fumée au produit alimentaire, dans lequel le dérivé de fumée liquide comprend :
(a) une acidité titrable à une concentration de 0 à 6 % en poids par unité de volume (p/v) ;
(b) au moins 10 % en poids par unité de volume (p/v) de carbonyle ;
(c) (c) des composés phénoliques à une concentration de moins de 0,5 % en poids par unité de volume (p/v) ;
(d) de l'eau à une concentration de moins de 97 % en poids par unité de volume (p/v) ; et a
(e) un pH d'au moins 3,0,
moyennant quoi la croissance d'un microorganisme est inhibée.

2. Procédé selon la revendication 1, dans lequel le microorganisme est choisi dans le groupe constitué par une bactérie, une levure et un champignon.

3. Procédé selon la revendication 2, dans lequel la bactérie est une souche de Streptococcus, Shigella, Hafnia, Enterobacter, Serratia, Staphylococcus, Pseudomonas, Citrobacter, Klebsiella, Escherichia coli, Listeria ou Salmonella.

4. Procédé selon la revendication 2, dans lequel la levure est une souche de Saccharomyces.

5. Procédé selon la revendication 2, dans lequel le champignon est une souche *d'Aspergillus*.

6. Procédé selon la revendication 1, dans lequel le produit alimentaire est un produit alimentaire prêt à manger.

7. Procédé selon la revendication 6, dans lequel le produit alimentaire prêt à manger comprend de la volaille, du porc, du boeuf, des fruits de mer ou un produit de pâte cuite.

8. Procédé selon la revendication 1, dans lequel le produit alimentaire est un produit alimentaire prêt à cuire.

9. Procédé selon la revendication 8, dans lequel le produit alimentaire prêt à cuire comprend de la volaille, du porc, du boeuf, des fruits de mer, des légumes frais ou un produit de pâte partiellement cuite.

10. Procédé selon la revendication 1, dans lequel le dérivé de fumée liquide comprend du carbonyle à une concentration de 12 % en poids par unité de volume (p/v), et un pH de 5,0 à 6,0.

11. Procédé selon la revendication 1, dans lequel le pH est compris entre 4,5 et 6,5.

12. Procédé selon la revendication 1, dans lequel le dérivé de fumée liquide est produit en traitant de la fumée liquide à travers un évaporateur pour séparer et condenser les éléments à faible point d'ébullition associés pour produire le dérivé de fumée liquide.

13. Procédé selon la revendication 1, dans lequel le dérivé de fumée liquide est vaporisé sur le produit alimentaire.

14. Procédé selon la revendication 1, dans lequel le produit alimentaire est immergé dans un bain du dérivé de fumée liquide.

15. Procédé selon la revendication 1, comprenant en outre le chauffage du produit alimentaire à au moins 73,9 °C (165 °F) durant au moins une minute.

16. Procédé selon la revendication 15, dans lequel l'étape de chauffage est réalisée après l'étape de traitement.

17. Procédé selon la revendication 1, dans lequel le dérivé de fumée liquide comprend en outre un agent de mouillage supplémentaire.

18. Procédé selon la revendication 17, dans lequel l'agent de mouillage supplémentaire comprend du polysorbate.

19. Dérivé antimicrobien de fumée liquide, dans lequel le dérivé de fumée liquide :
(i) comprend
(a) une acidité titrable à une concentration de 0 à 6 % en poids par unité de volume (p/v) ;
(b) du carbonyle à au moins 10 % en poids par unité de volume ;
(c) (c) des composés phénoliques à une concentration de moins de 0,5 % en poids par unité de volume (p/v) ;
(d) de l'eau à une concentration de moins de 97 % en poids par unité de volume (p/v) ; et a
(e) un pH d'au moins 3,0 ;
(ii) n'impartit pas de goût de fumée à un produit alimentaire quand le produit alimentaire est traité avec le dérivé de fumée liquide ; et
(iii) inhibe la croissance sur un produit alimentaire d'un microorganisme choisi dans le groupe constitué par *Streptococcus, Shigella, Hafnia, Enterobacter, Serratia, Staphylococcus, Pseudomonas, Citrobacter, Klebsiella, Escherichia coli, Listeria, Salmonella, Saccharomyces* et *Aspergillus* quand le produit alimentaire est traité avec le dérivé de fumée liquide.

20. Dérivé antimicrobien de fumée liquide selon la revendication 19, dans lequel le pH est compris entre 4,5 et 6,5.

21. Dérivé antimicrobien de fumée liquide selon la revendication 19, dans lequel le dérivé de fumée liquide comprend du carbonyle à une concentration de 12 % en poids par unité de volume (p/v) et un pH de 5,0 à 6,0.

22. Dérivé antimicrobien de fumée liquide selon la revendication 19, dans lequel le produit alimentaire est un produit alimentaire prêt à manger.

23. Dérivé antimicrobien de fumée liquide selon la revendication 22, dans lequel le produit alimentaire prêt à manger comprend de la volaille, du porc, du boeuf, des fruits de mer ou un produit de pâte cuite.

24. Dérivé antimicrobien de fumée liquide selon la revendication 19, dans lequel le produit alimentaire est un produit alimentaire prêt à cuire.

25. Dérivé antimicrobien de fumée liquide selon la revendication 24, dans lequel le produit alimentaire prêt à cuire comprend de la volaille, du porc ou du boeuf, des fruits de mer ou un produit de pâte partiellement cuite.

26. Dérivé antimicrobien de fumée liquide selon la revendication 19, dans lequel le dérivé de fumée liquide comprend un agent de mouillage supplémentaire.

27. Dérivé antimicrobien de fumée liquide selon la revendication 26, dans lequel l'agent de mouillage supplémentaire comprend du polysorbate.
